Europäisches Patentamt

European Patent Office

Office européen des brevets

(19)

(11) **EP 0 518 256 B1**

(12) **EUROPEAN PATENT SPECIFICATION**

(45) Date of publication and mention
of the grant of the patent:
**03.09.1997 Bulletin 1997/36**

(51) Int Cl.6: **H04N 9/64**, H04N 9/66

(21) Application number: **92109666.5**

(22) Date of filing: **09.06.1992**

(54) **Chrominance signal processing device**

Chrominanzsignal-Verarbeitungsschaltung

Circuit de traitement de signal de chrominance

(84) Designated Contracting States:
**DE FR GB**

(30) Priority: **10.06.1991 JP 137818/91
10.06.1991 JP 137819/91
10.06.1991 JP 137820/91**

(43) Date of publication of application:
**16.12.1992 Bulletin 1992/51**

(73) Proprietor: **CANON KABUSHIKI KAISHA
Tokyo (JP)**

(72) Inventor: **Fukatsu, Tsutomu,
c/o Canon Kabushiki Kaisha
Ohta-ku, Tokyo (JP)**

(74) Representative:
**Pellmann, Hans-Bernd, Dipl.-Ing. et al
Patentanwaltsbüro
Tiedtke-Bühling-Kinne & Partner
Bavariaring 4
80336 München (DE)**

(56) References cited:
**EP-A- 0 364 225          US-A- 4 700 217
US-A- 4 797 730**

- **PATENT ABSTRACTS OF JAPAN vol. 9, no. 43
(E-298)22 February 1985 & JP-A-59 181 889
(SONY K.K.) 16 October 1984**
- **PATENT ABSTRACTS OF JAPAN vol. 15, no. 86
(E-1039)28 February 1991 & JP-A-02 301 291
(CANON INC.) 13 December 1990**
- **PATENT ABSTRACTS OF JAPAN vol. 7, no. 76
(E-167)30 March 1983 & JP-A-58 003 488 (SONY
K.K.) 10 January 1983**
- **PATENT ABSTRACTS OF JAPAN vol. 11, no. 231
(E-527)28 July 1987 & JP-A-62 045 291 (NEC
CORP.) 27 February 1987**

**Description**

Background of the Invention:

Field of the Invention:

The present invention relates to a chrominance signal processing device for processing a carrier chrominance signal.

Description of the Related Art:

It is known that, for example, a field memory is used to perform digital processing, such as noise reduction, on a composite image signal composed of a luminance signal and a carrier chrominance signal. It is advantageous to perform such digital processing after the carrier chrominance signal has been demodulated into a baseband signal such as color-difference signals, because the digital processing can be performed without taking account of conditions such as the phase of the carrier chrominance signal. A digital color processing apparatus in described in EP-A-0 364 225.

In the case of the demodulation of the carrier chrominance signal into the color-difference signals, baseband color-difference signals of digital signal form are obtained by performing direct analog-to-digital (A/D) conversion of the carrier chrominance signal by using a sampling clock signal phase-synchronized with the color burst signal of the carrier chrominance signal.

The operation of the aforesaid demodulation processing will be described below in detail with illustrative reference to a PAL-system color television signal.

In the PAL system, a carrier chrominance signal C separated from the PAL-system color television signal is subjected to A/D conversion using a sampling clock signal phase-synchronized with a frequency which is four times the frequency of the color burst signal. The obtained sample data is divided into sample data of four kinds respectively corresponding to four phases, on the basis of a reference phase. From among the sample data of four kinds, sample data which are 180° out of phase with each other are subjected to subtraction to obtain the difference therebetween, whereby the carrier chrominance signal C is demodulated into color-difference signals.

The following demodulated data are obtained through the aforesaid demodulation processing. For an odd line (when the phase of the color burst signal is 225°)

$$PBY=B-Y+DC$$

$$ERY=R-Y+DC$$

$$NBY=-(B-Y)+DC$$

$$LRY=-(R-Y)+DC$$

for an even line (when the phase of the color burst signal is 135°)

$$PBY=B-Y+DC$$

$$ERY=-(R-Y)+DC$$

$$NBY=-(B-Y)+DC$$

$$LRY=R-Y+DC$$

therefore,

$$B-Y=(PBY-NBY)/2$$

$$R-Y=(ERY-LRY)/2 \text{ (for an odd line)}$$

$$=-(ERY-LRY)/2 \text{ (for an even line)}$$

where PBY represents sample data obtained on the basis of a sampling clock signal of B-Y carrier phase (0°), ERY sample data obtained on the basis of a sampling clock signal whose phase is 90°, NBY sample data obtained on the basis of a sampling clock signal whose phase is 180°, and LRY sample data obtained on the basis of a sampling clock signal whose phase is 270°.

Identical R-Y data can be obtained irrespective of the polarity of each line by reversing the phase of each of the sample data ERY and LRY from line to line or by reversing the polarity of each of the sample data ERY and LRY from line to line.

If the phase of the color burst signal is exactly coincident with the phase of the sampling clock signal as described above, the carrier chrominance signal can be demodulated into perfect color-difference signals through the above-described processing. In practice, however, it is difficult to make the phase of the sampling clock signal coincident with the phase of the color burst signal, i.e., a demodulation axis, due to various factors such as variations in a source voltage and allowable differences in characteristic between individual circuits such as a PLL (phase-locked loop) circuit and a reference signal transmission system used in forming the sampling clock signal phase-synchronized with the color burst signal.

Regarding an NTSC color television signal, even if the phase of a sampling clock signal is not coincident with a demodulation axis, no problem occurs if the quadrature relationship therebetween is preserved, except during processing handling an absolute hue. However, regarding the PAL-system color television signal, the following problems occur.

If a carrier chrominance signal having a phase angle $\theta$, an amplitude $r$ and a direct-current component DC is subjected to A/D conversion using sampling clock signals which are respectively shifted from a B-Y axis and an R-Y axis by a phase $\phi$, the following sample data are obtained. (Data for odd lines are marked with ', and data for even lines are marked with ".)

For an odd line (when the phase of the color burst signal is 225°)

$$PBY'=r*\cos(\theta-\phi)+DC$$

$$ERY'=r*\sin(\theta-\phi)+DC$$

$$NBY'=-r*\cos(\theta-\phi)+DC$$

$$LRY'=-r*\sin(\theta-\phi)+DC$$

for an even line (when the phase of the color burst signal is 135°)

$$PBY''=r*\cos(\theta+\phi)+DC$$

$$ERY''=-r*\sin(\theta+\phi)+DC$$

$$NBY''=-r*\cos(\theta+\phi)+DC$$

$$LRY''=r*\sin(\theta+\phi)+DC$$

According to the above-described results, the obtained demodulated data change from line to line and it is, therefore, difficult to preserve hues throughout image processing such as the processing of joining two pictures together, for example, "wipe" or "fade", or noise reduction utilizing the correlation between images.

To solve the above-described problems, a method may be adopted in which the sum of demodulated data each having a different line polarity is found in the following manner.

$$BY \text{ (odd line + even line)}$$

$$=(PBY'-DC)+(PBY''-DC)$$

$$=2r(\cos(\theta-\phi)+\cos(\theta+\phi))$$

$$=2r\cos\phi\cos\theta$$

$$RY \text{ (odd line + even line)}$$

$$=(ERY'-DC)+(LRY''-DC)$$

$$=2r(\sin(\theta-\phi)+\sin(\theta+\phi))$$

$$=2r\cos\phi\sin\theta$$

According to the above-described results, each of the demodulated chrominance signal components is obtained by multiplying the B-Y signal component (in the case of the data BY) or the R-Y signal component (in the case of the data RY) by the constant scalar $2\cos\phi$. Thus, an absolute hue is determined.

To modulate the color-difference signals into the original C (chrominance) signal, data of opposite polarity is formed from the demodulated data, and positive and negative data on each of the B-Y and R-Y components are sequentially converted from digital to analog in accordance with a chroma sequence. In the PAL color television system, since the polarity of an R-Y carrier reverses from line to line, D/A conversion of B-Y demodulated data, R-Y opposite polarity data, B-Y opposite polarity data and R-Y demodulated data is performed in that order from line to line.

However, in the above-described conventional example, if the data DC obtained by performing A/D conversion of a direct-current component of the carrier chrominance signal is not exactly coincident with the center value of the C signal, the C signal obtained by modulating the demodulated data will have a phase distortion with the result that hue variations will be caused by the modulation processing.

Summary of the Invention:

It is, therefore, an object of the present invention to provide a chrominance signal processing device capable of solving the above-described problems.

Another object of the present invention is to provide a chrominance signal processing device capable of converting a chrominance signal into color-difference signals without degradation.

To achieve the above objects, in accordance with one aspect of the present invention, there is provided a chrominance signal processing device for demodulating a carrier chrominance signal, which comprises sampling clock signal generating means for generating a plurality of kinds of sampling clock signals having predetermined phase differences relative to each other, on the basis of a color burst signal contained in a carrier chrominance signal, sample data forming means for forming a plurality of kinds of sample data by sampling the carrier chrominance signal in accordance with the plurality of kinds of sampling clock signals generated by the sampling clock signal generating means, and outputting the plurality of kinds of sample data, first added data forming means for forming first added data by adding together two kinds of sample data from among the plurality of kinds of sample data outputted from the sample data forming means, and outputting the first added data, the two kinds of sample data being formed by sampling the carrier chrominance signal in the sample data forming means in accordance with two kinds of sampling clock signals each having a 180° phase difference relative to the other generated by the sampling clock signal generating means, delay means for delaying the first added data outputted from the first added data forming means by one horizontal synchronizing period and outputting the delayed first added data, and second added data forming means for forming second added data by adding the first added data outputted from the first added data forming means to the delayed first added data outputted from the delay means, and outputting the second added data as demodulated chrominance data.

Another object of the present invention is to provide a chrominance signal processing device capable of converting a carrier chrominance signal into color-difference signals without a beat or the like.

To achieve the above object, in accordance with another aspect of the present invention, there is provided a chrominance signal processing device for demodulating a carrier chrominance signal, which comprises sampling clock signal generating means for generating a plurality of kinds of sampling clock signals having predetermined phase differences relative to each other, on the basis of a color burst signal contained in a carrier chrominance signal, sample data forming means for forming a plurality of kinds of sample data by sampling the carrier chrominance signal in accordance with the plurality of kinds of sampling clock signals generated by the sampling clock signal generating means, and outputting the plurality of kinds of sample data, first added data forming means for forming first added data by adding together two kinds of sample data from among the plurality of kinds of sample data outputted from the sample data forming means, and outputting the first added data, the two kinds of sample data being formed by sampling the carrier chrominance signal in the sample data forming means in accordance with two kinds of sampling clock signals each having a 180° phase difference relative to the other generated by the sampling clock signal generating means, data rate and clock converting means for converting a data rate and clock of the first added data outputted from the first added data forming means in synchronism with a data transfer clock, and outputting the converted first added data, delay means for delaying the first added data outputted from the data rate converting means by one horizontal synchronizing period and outputting the delayed first added data, and second added data forming means for forming second added data by adding the first added data outputted from the data rate converting means to the delayed first added data outputted from the delay means, and outputting the second added data as demodulated chrominance data.

Another object of the present invention is to provide a chrominance signal processing device capable of converting a carrier chrominance signal into color-difference signals by means of a simple construction.

To achieve the above object, in accordance with another aspect of the present invention, there is provided a chrominance signal processing device for demodulating a carrier chrominance signal, which comprises sampling clock signal generating means for generating a plurality of kinds of sampling clock signals having predetermined phase differences relative to each other, on the basis of a color burst signal contained in a carrier chrominance signal, sample data forming means for forming a plurality of kinds of sample data by sampling the carrier chrominance signal in accordance with the plurality of kinds of sampling clock signals generated by the sampling clock signal generating means, and outputting the plurality of kinds of sample data, first sample data extracting means for extracting first sample data from among the plurality of kinds of sample data outputted from the sample data forming means and outputting the first sample data, the first sample data being formed by sampling the carrier chrominance signal in the sample data forming means in accordance with a first sampling clock signal generated by the sampling clock signal generating means, second sample data extracting means for extracting second sample data from among the plurality of kinds of sample data outputted from the sample data forming means and outputting the second sample data, the second sample data being formed by sampling the carrier chrominance signal in the sample data forming means in accordance with a second sampling clock signal having a 180° phase difference relative to the first sampling clock signal generated by the sampling clock signal generating means, third sample data extracting means for extracting third sample data from among the plurality of kinds of sample data outputted from the sample data forming means and outputting the third sample data, the third sample data being formed by sampling the carrier chrominance signal in the sample data forming means in accordance with a third sampling clock signal having a 90° phase difference relative to the first sampling clock signal generated by the sampling clock signal generating means, first delay means for delaying the first sample data outputted from the first sample data extracting means by one horizontal synchronizing period and outputting the delayed first sample data, first added data forming means for forming first added data by adding the first sample data outputted from the first delay means to the second sample data outputted from the second sample data extracting means, and outputting the first added data, second delay means for delaying the third sample data outputted from the third sample data extracting means by one horizontal synchronizing period and outputting the delayed third sample data, second added data forming means for forming second added data by adding the third sample data outputted from the second delay means to the third sample data outputted from the third sample data extracting means, and outputting the second added data, and data outputting means for receiving the first added data outputted from the first added data forming means and the second added data outputted from the second added data forming means, and outputting the received first added data and the received second added data alternately for each horizontal synchronizing period as demodulated chrominance data.

The above and other objects, features and advantages of the present invention will become apparent from the following detailed description of preferred embodiments of the present invention, taken in conjunction with the accompanying drawings.

Brief Description of the Drawings:

Fig. 1 is a schematic block diagram showing the construction of a first embodiment of a chrominance signal processing device according to the present invention;

Fig. 2 is a timing chart aiding in explaining the operation of the construction shown in Fig. 1;

Fig. 3 is a timing chart aiding in explaining the operation of the construction shown in Fig. 1;

Figs. 4(a), 4(b), 4(c) and 4(d) are views each showing in detail a portion of the construction shown in each of Figs. 1, 5 and 9;

Fig. 5 is a schematic block diagram showing the construction of a second embodiment of the chrominance signal processing device according to the present invention;

Fig. 6 is a timing chart aiding in explaining the operation of the construction shown in Fig. 5;

Fig. 7 is a timing chart aiding in explaining the operation of the construction shown in Fig. 5;

Fig. 8 is a view showing in detail the construction of each of the clock converting circuits shown in Fig. 5;

Fig. 9 is a schematic block diagram showing the construction of a third embodiment of the chrominance signal processing device according to the present invention;

Fig. 10 is a timing chart aiding in explaining the operation of the construction shown in Fig. 9; and

Fig. 11 is a timing chart aiding in explaining the operation of the construction shown in Fig. 9.

Detailed Description of the Preferred Embodiments:

Preferred embodiments of the present invention will be described below with reference to the accompanying drawings.

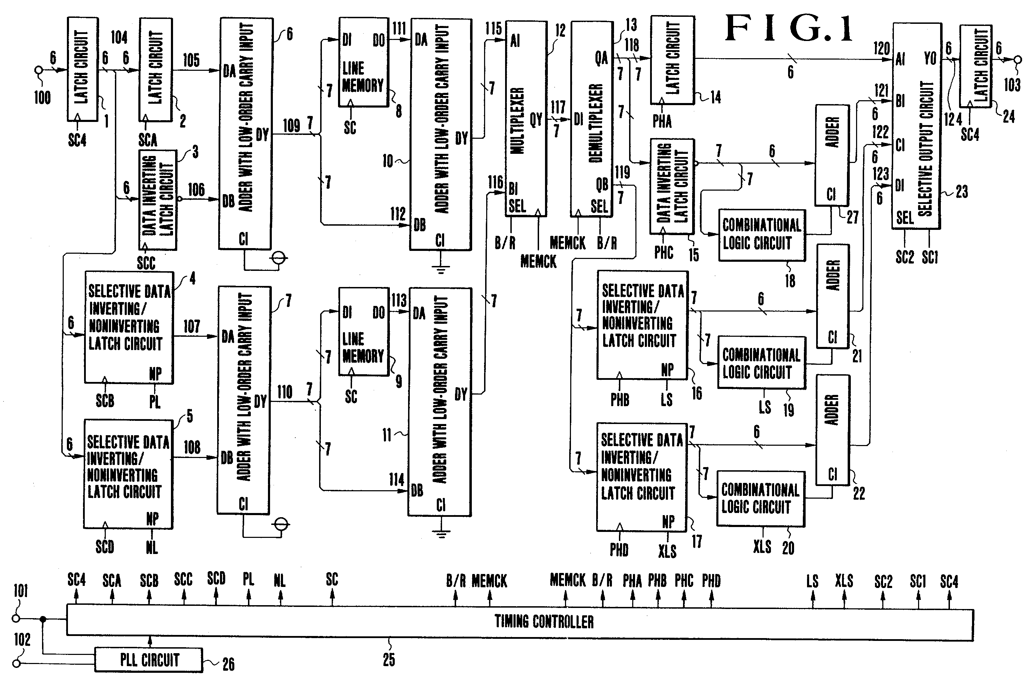

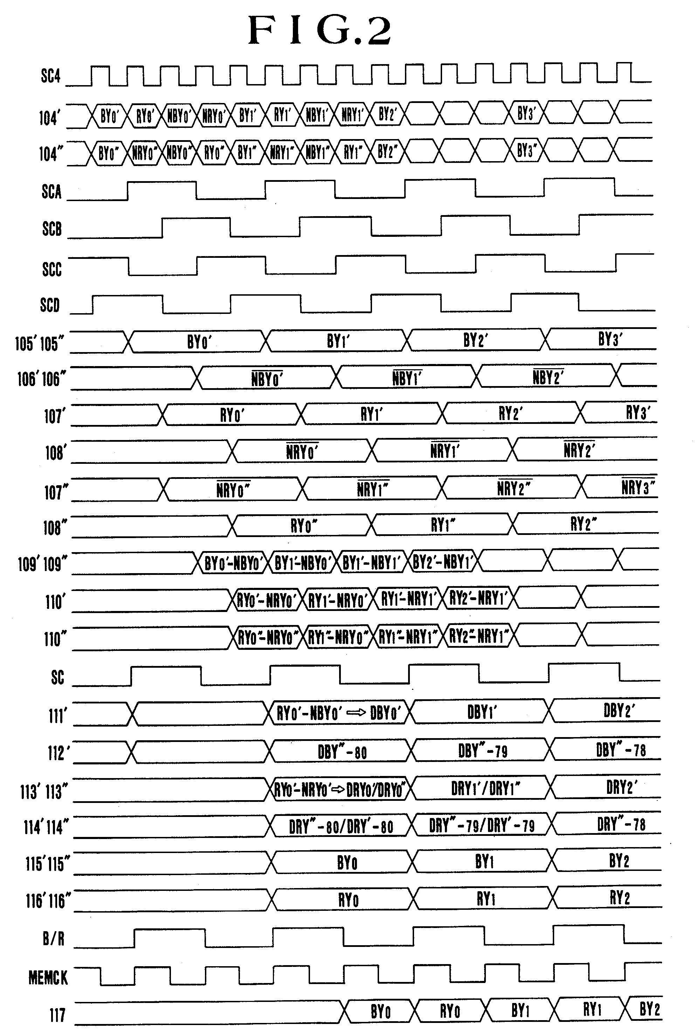

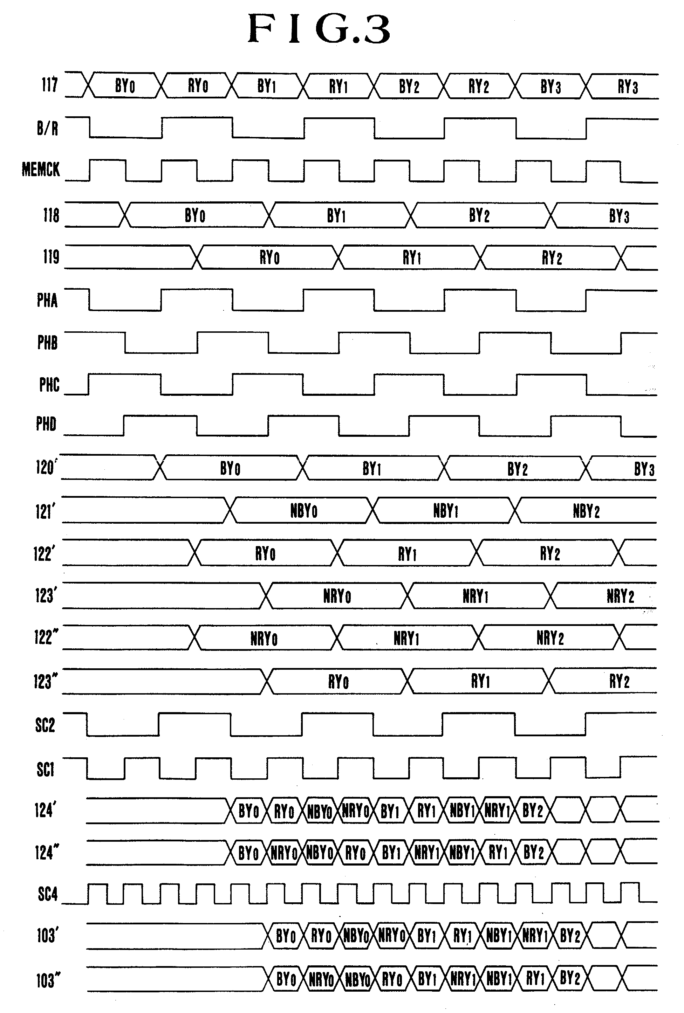

Fig. 1 is a schematic block diagram showing the construction of a first embodiment of a chrominance signal processing device to which the present invention is applied. Figs. 2 and 3 are timing charts aiding in explaining the operation of the construction shown in Fig. 1.

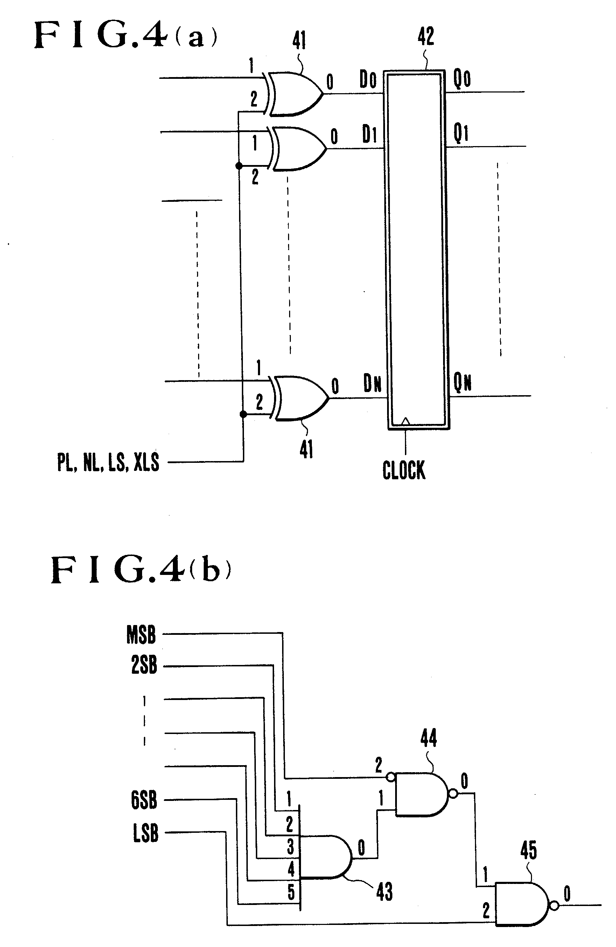

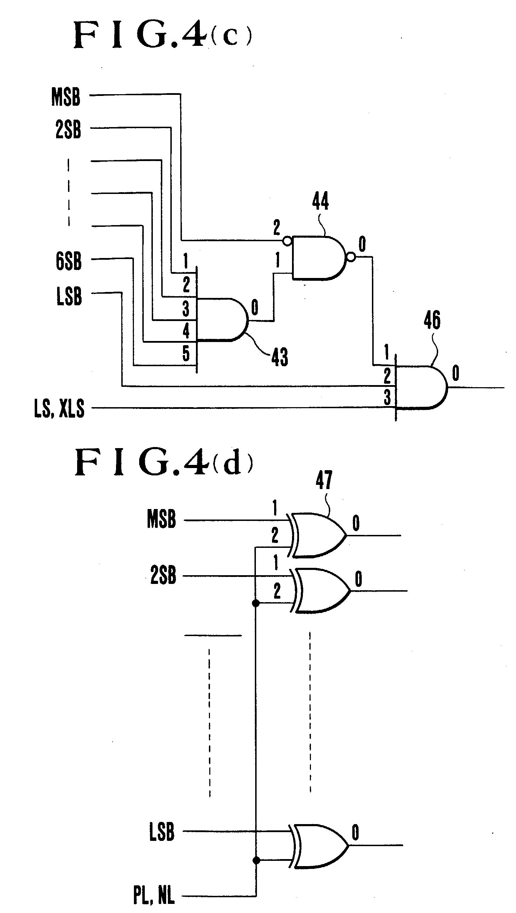

The chrominance signal processing device shown in Fig. 1 includes latch circuits 1, 2, 14 and 24, data inverting latch circuits 3 and 15, selective data inverting/noninverting latch circuits 4, 5, 16 and 17, adders 6, 7, 10 and 11 each having a low-order carry input, line memories 8 and 9, a multiplexer 12, a demultiplexer 13, combinational logic circuits 18, 19 and 20 such as those shown in Figs. 4(b) and 4(c), adders 21, 22 and 27, a selective output circuit 23, a timing controller 25 and a PLL circuit 26.

The chrominance signal processing device also includes an input terminal 100 for input of C data (6 bits per sample) obtained by performing A/D conversion of a C signal by means of an A/D converter which is not shown, an input terminal 101 for input of the C signal, and an input terminal 102 for input of a timing signal indicative of the period of a color burst signal obtained through a sync separating circuit or the like which is not shown.

In the chrominance signal processing device shown in Fig. 1, a color burst signal is extracted from a carrier chrominance signal inputted through the input terminal 101 by the PLL circuit 26 in accordance with a timing signal inputted through the input terminal 102. The PLL circuit 26 generates a clock signal SC4 which is phase-synchronized with four times the average phase of the color burst signal, and applies the clock signal SC4 to the latch circuit 1. By the application of the clock signal SC4, the latch circuit 1 is operated to generate C data 104. (Refer to Fig. 2. In Fig. 2, data 104' represents data for odd lines, while data 104" represents data for even lines. Similarly, the marks ' and " represent an odd line and an even line, respectively.)

The C data 104 is then applied to each of the latch circuit 2, the data inverting latch circuit 3 and the selective data inverting/noninverting latch circuits 4 and 5. These circuits 2, 3, 4 and 5 are respectively operated by the application of clock signals SCA, SCC, SCB and SCD each having a frequency $f_{SC}$ ($f_{SC}$: subcarrier frequency) and a predetermined phase difference with respect to the color burst signal, so that the C data 104 is divided into data of four kinds respectively corresponding to four phases. The data outputted from the latch circuit 2 and the data outputted from the data inverting latch circuit 3 are added together by the adder 6, while the data outputted from the respective selective data inverting/noninverting latch circuits 4 and 5 are added together by the adder 7. By such additions, two difference data, each of which indicates the difference between data which are 180° out of phase with each other, are formed from the aforesaid four kinds of data. One of the two difference data is supplied to the line memory 8 and the adder 10, and the other to the line memory 9 and the adder 11.

If it is assumed that the C data outputted from the A/D converter is represented as a twos (2's) complement, the aforesaid processing is represented as follows:

$$DBY = D_{SCA} + (\overline{D_{SCC}} + 1)$$

(DBY is pseudo B-Y data, $D_{SCA}$ is C data extracted by the application of the clock signal SCA, and $D_{SCC}$ is C data extracted by the application of the clock signal SCC.)

In other words, the latch circuit 2 operating by the application of the clock signal SCA and the data inverting latch circuit 3 operating by the application of the clock signal SCC respectively extract the data $D_{SCA}$ and the data $D_{SCC}$ which are 180° out of phase with each other, i.e., of opposite polarity to each other. The data $D_{SCC}$ is inverted by the data inverting latch circuit 3 and supplied to the adder 6, and a signal of high level is applied to the carry input (shown by CI in Fig. 1) of the adder 6 so that the above-described processing is effected.

In the PAL color television system, since the phase of the R-Y carrier is reversed from line to line, pseudo R-Y data DRY is formed as follows. The respective selective data inverting/noninverting latch circuits 4 and 5 operating by the application of the clock signals SCB and SCD extract data $D_{SCB}$ and $D_{SCD}$ of opposite polarity to each other, and reverse the phases of the data $D_{SCB}$ and $D_{SCD}$ from line to line by means of timing signals PL and NL in accordance with the phase of the color burst signal. The respective selective data inverting/noninverting latch circuits 4 and 5 output the resultant data $D_{SCB}$ and $D_{SCD}$ to the adder 7, where the pseudo R-Y data DRY is formed in a manner similar to that used for forming the pseudo B-Y data DBY.

Each of the selective data inverting/noninverting latch circuits 4 and 5 is constructed, for example, as shown in Fig. 4(a), and includes exclusive OR gates 41 and a latch circuit 42. The selective data inverting/noninverting latch circuits 4 and 5 are respectively arranged to reverse the phases of input data from line period to line period in accordance with the timing signals PL and NL which are of opposite polarity to each other and which are reversed in polarity from line period to line period.

The demodulated data formed in the above-described manner are each represented as follows:

$$BY=V_C+V_{DC}=D_{SCA}$$

$$NBY=-V_C+V_{DC}=D_{SCC}$$

$$DBY=BY-NBY=2V_C$$

$$RY=\pm V_C+V_{DC}=D_{SCB}$$

$$NRY=\mp V_C+V_{DC}=D_{SCD}$$

$$DRY=\pm RY\mp NRY=2V_C$$

($V_C$ is the amplitude of the C signal, and $V_{DC}$ is the DC offset component of the C signal.)

If no phase of the demodulation axis coincides with the phase of the sampling clock signal as referred to in the description of the related art, the demodulated data obtained through the above-described processing will change from line to line. For this reason, each of the demodulated data from the adders 6 and 7 is supplied to the corresponding one of the adders 10 and 11 in two different forms: in the case of the adder 10, demodulated data delayed by one line period by the line memory 8 and demodulated data not delayed, or in the case of the adder 11, demodulated data delayed by one line period by the line memory 9 and demodulated data not delayed. Thus, demodulation processing including processing associated with the color burst signal is completed.

Since the data rate of the C signal is low with respect to that of a Y signal which is in general processed at the same time, the C signal is outputted selectively and in a time-division manner from the multiplexer 12 operative in accordance with timing signals B/R and MEMCK.

In modulation, the demodulated data which have been formed in the above-described manner are formed into the following modulated data by means of the demultiplexer 13, the latch circuit 14, the data inverting latch circuit 15 and the selective data inverting/noninverting latch circuits 16 and 17.

$$BY=V_C+V_{DC'}$$

$$NBY=-V_C+V_{DC'}$$

$$RY=\pm V_C+V_{DC'}$$

EP 0 518 256 B1

$$NRY = \mp V_C + V_{DC'}$$

The modulated data thus formed are sequentially outputted by the selective output circuit 23 and the latch circuit 24 in accordance with a chroma sequence, and the output of the latch circuit 24 is restored to the C signal through D/A conversion which is not referred to herein.

The respective selective data inverting/noninverting latch circuits 16 and 17 operating by the application of the clock signals PHB and PHD extract data of opposite polarity to each other from the modulated data, and alternately reverse the phases of the respective extracted data by means of timing signals LS and XLS. Thus, R-Y data which alternate in polarity are formed in a manner similar to that used for forming the demodulated B-Y data.

Although the level of each of the demodulated data obtained through the above-described demodulation is $2V_C$, the level of each of the modulated data required during modulation is $V_C$. If the dynamic ranges of the A/D and D/A converters employed are of the same level, the level of each of the modulated data needs to be reduced to 1/2.

However, if the level of each of the modulated data is reduced to 1/2 as described above, the cancellation of the least significant bit (LSB) occurs and the S/N of each of the modulated data will be adversely affected.

For this reason, in the first embodiment, as described above, each demodulated data is made up of 7 bits = 6 bits (the number of bits upon A/D conversion) + 1 bit, and loss of the peak-to-peak value of the data is prevented by performing the following processing during the modulation.

Such processing is performed by each of the combinational logic circuits 18, 19 and 20. The combinational logic circuit 18 is constructed as shown in Fig. 4(b), while each of the combinational logic circuits 19 and 20 is constructed as shown in Fig. 4(c).

Fig. 4(b) is a diagram showing the construction of the combinational logic circuit 18 which consists of AND gates 43 and 45 as well as a NAND gate 44. Fig. 4(c) is a diagram showing the construction of each of the combinational logic circuits 19 and 20 which consists of the AND gate 43 and the NAND gate 44 as well as an AND gate 46.

From among the 7-bit data outputted from the data inverting latch circuit 15, the high-order six bits are supplied to the adder 27. The combinational logic circuit 18 shown in Fig. 4(b) controls the adder 27, thereby enabling it to add, or disabling it from adding, a carry input (marked with CI on the adder 27 of Fig. 1) to the supplied 6-bit data. Similarly, from among the 7-bit data outputted from each of the selective data inverting/noninverting latch circuits 16 and 17, the high-order six bits are supplied to the associated one of the adders 21 and 22. The combinational logic circuits 19 and 20 each of which is shown in Fig. 4(C) control the respective adders 21 and 22, thereby enabling them to add, or disabling them from adding, carry inputs (marked with CI's on them in Fig. 1) to the respective supplied 6-bit data. Accordingly, it is possible to perform data inversion and form the aforesaid modulated data without the need to increase the number of bits of each of the A/D and D/A converters, that is, with the resolution of each of the A/D and D/A converters being maintained.

The modulated data with respect to the demodulated data are shown below by way of example.

| Demodulated Data | +10 | +11 | -10 | -11 |
|---|---|---|---|---|
| Modulated Data (Not Inverted) | +5 | +5 | -5 | -6 |
| Modulated Data (Inverted) | -5 | -6 | +5 | +5 |
| Peak-to-Peak Value | +10 | +11 | -10 | -11 |

The C signal is restored as an analog signal by performing D/A conversion of the modulated data formed in the above-described manner and passing the obtained analog data through a low-pass filter which is not shown. Accordingly, the symmetry of the C signal is not lost during the modulation processing.

Each of the combinational logic circuits 18, 19 and 20 also serves to prevent an overflow from occurring when processing similar to the aforesaid one is performed if demodulated data inputted for modulation indicates a minimum value (negative number whose absolute value is a maximum).

As is apparent from the above description, in the chrominance signal processing device explained as the first embodiment, during the demodulation of a carrier chrominance signal, since the difference between the C data and data of opposite phase is employed as the demodulated data for the carrier chrominance signal, it is possible to perform digital modulation/demodulation of the carrier chrominance signal without using the DC offset data of the C data. Accordingly, if a DC offset occurs near a threshold utilized in the A/D conversion, it is possible to prevent hue variations in the carrier chrominance signal due to modulation/demodulation processing from being caused by various factors such as a discrepancy between the C data and the DC offset value due to the fluctuations of the DC offset data, variations in a source voltage and allowable differences in characteristic between individual elements. In addition, it is possible to prevent degradation of the resolution of the modulation/demodulation processing.

By adding each line of demodulated data to the adjacent line of demodulated data, it is possible to prevent different demodulated data from appearing from line to line even if the phase of a sampling clock signal does not coincide with the phase of a demodulation axis. Accordingly, it is possible to realize demodulation based on an absolute axis. In addition, since the reversal of the phase of the color burst signal from line to line in the PAL color television system is effected by reversing data polarity, the geometric arrangement of sample points is completed in the form of a 4-field sequence. Accordingly, image processing such as picture combination is facilitated.

As is apparent from the above description, according to the first embodiment, it is possible to provide a chrominance signal processing device capable of converting a carrier chrominance signal into color-difference signals without degradation, or capable of converting the converted color-difference signals into the original carrier chrominance signal without degradation, by means of a simple construction.

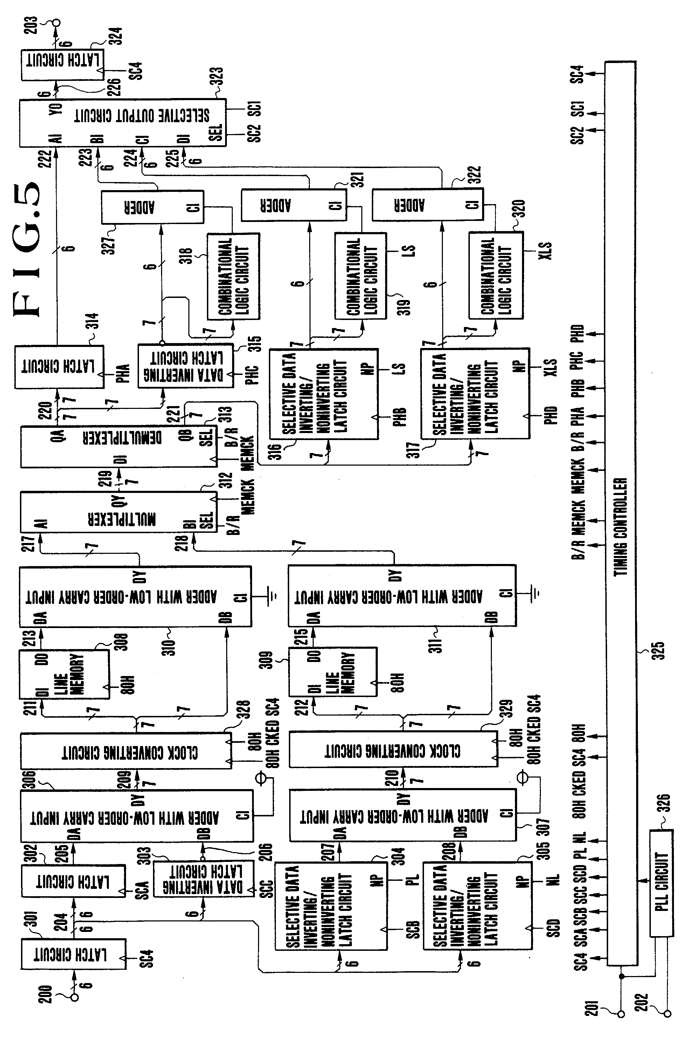

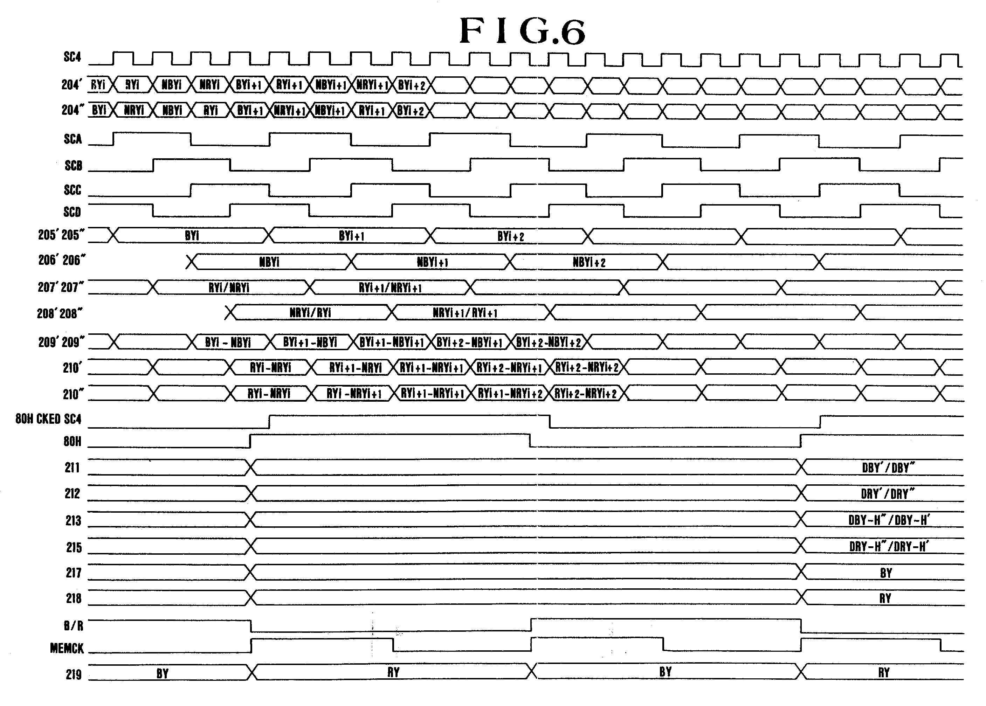

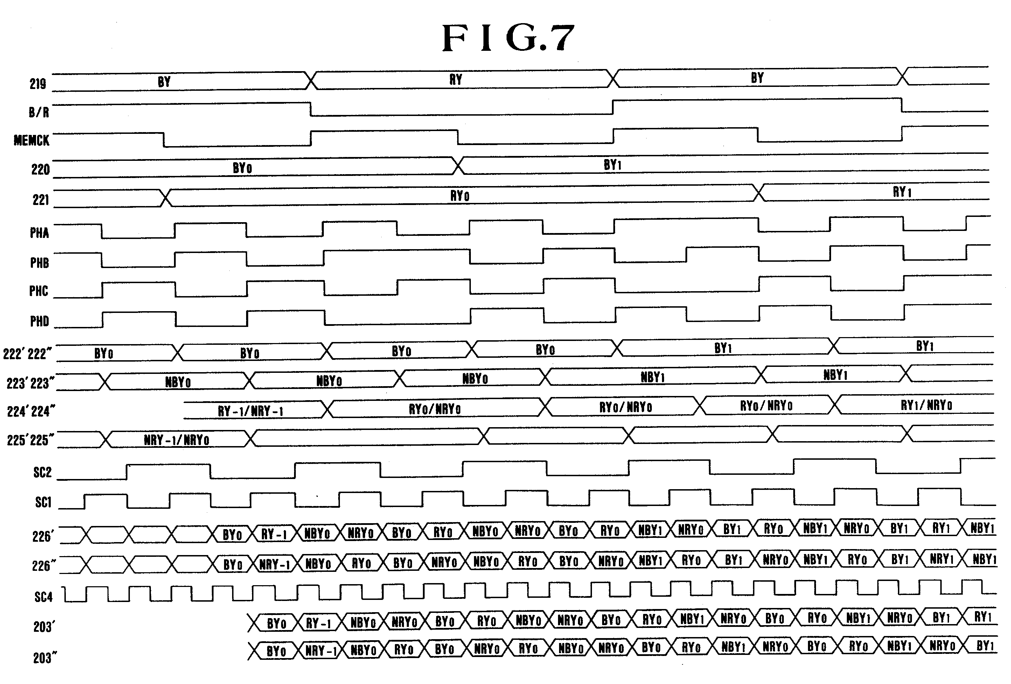

Fig. 5 is a schematic block diagram showing the construction of a second embodiment of the chrominance signal processing device to which the present invention is applied. Figs. 6 and 7 are timing charts aiding in explaining the operation of the construction shown in Fig. 5.

The chrominance signal processing device shown in Fig. 5 includes latch circuits 301, 302, 314 and 324, data inverting latch circuits 303 and 315, selective data inverting/noninverting latch circuits 304, 305, 316 and 317, adders 306, 307, 310 and 311 each having a low-order carry input, line memories 308 and 309, a multiplexer 312, a demultiplexer 313, combinational logic circuits 318, 319 and 320 such as those shown in Figs. 4(b) and 4(c), adders 321, 322 and 327, a selective output circuit 323, a timing controller 325, a PLL circuit 326, and clock converting circuit 328 and 329.

The chrominance signal processing device also includes an input terminal 200 for input of C data (6 bits per sample) obtained by performing A/D conversion of a C signal by means of an A/D converter which is not shown, an input terminal 201 for input of the C signal, and an input terminal 202 for input of a timing signal indicative of the period of a color burst signal obtained through a sync separating circuit or the like which is not shown.

In the chrominance signal processing device shown in Fig. 5, a color burst signal is extracted from a carrier chrominance signal inputted through the input terminal 201 by the PLL circuit 326 in accordance with a timing signal inputted through the input terminal 202. The PLL circuit 326 generates a clock signal SC4 which is phase-synchronized with four times the average phase of the color burst signal, and applies the clock signal SC4 to the latch circuit 301. By the application of the clock signal SC4, the latch circuit 301 is operated to generate C data 204. (Refer to Fig. 6. In Fig. 6, data 204' represents data for odd lines, while data 204" represents data for even lines. Similarly, the marks ' and " represent an odd line and an even line, respectively.)

The C data 204 is then applied to each of the latch circuit 302, the data inverting latch circuit 303 and the selective data inverting/noninverting latch circuits 304 and 305. These circuits 302, 303, 304 and 305 are respectively operated by the application of clock signals SCA, SCC, SCB and SCD each having a frequency $f_{sc}$ ($f_{sc}$: subcarrier frequency) and a predetermined phase difference with respect to the color burst signal, so that the C data 204 is divided into data of four kinds respectively corresponding to four phases. The data outputted from the latch circuit 302 and the data outputted from the data inverting latch circuit 303 are added together by the adder 306, while the data outputted from the respective selective data inverting/noninverting latch circuits 304 and 305 are added together by the adder 307. By such additions, two difference data, each of which indicates the difference between data which are 180° out of phase with each other, are formed from the aforesaid four kinds of data. The respective difference data are supplied to the clock converting circuits 328 and 329.

If it is assumed that the C data outputted from the A/D converter is represented as a twos (2's) complement, the aforesaid processing is represented as follows.

$$DBY = D_{SCA} + (\overline{D_{SCC}} + 1)$$

(DBY is pseudo B-Y data, $D_{SCA}$ is C data extracted by the application of the clock signal SCA, and $D_{SCC}$ is C data extracted by the application of the clock signal SCC.)
In other words, the latch circuit 302 operating by the application of the clock signal SCA and the data inverting latch circuit 303 operating by the application of the clock signal SCC respectively extract the data $D_{SCA}$ and the data $D_{SCC}$ which are 180° out of phase with each other, i.e., of opposite polarity to each other. The data $D_{SCC}$ is inverted by the data inverting latch circuit 303 and supplied to the adder 306, and a signal of high level is applied to the carry input (shown by CI in Fig. 6) of the adder 306 so that the above-described processing is effected.

In the PAL color television system, since the phase of the R-Y carrier is reversed from line to line, pseudo R-Y data DRY is formed as follows. The respective selective data inverting/noninverting latch circuits 304 and 305 operating by the application of the clock signals SCB and SCD extract data $D_{SCB}$ and $D_{SCD}$ of opposite polarity to each other, and reverse the phases of the data $D_{SCB}$ and $D_{SCD}$ from line to line by means of timing signals PL and NL in accordance with the phase of the color burst signal. The respective selective data inverting/noninverting latch circuits 304 and 305 output the resultant data $D_{SCB}$ and $D_{SCD}$ to the adder 307, where the pseudo R-Y data DRY is formed in a manner similar to that used for forming the pseudo B-Y data DBY.

Each of the selective data inverting/noninverting latch circuits 304 and 305 is constructed, for example, as shown in Fig. 4(a) referred to previously, and includes the exclusive OR gates 41 and the latch circuit 42. The selective data inverting/noninverting latch circuits 304 and 305 are respectively arranged to reverse the phases of input data from line period to line period in accordance with the timing signals PL and NL which are of opposite polarity to each other and which are reversed in polarity from line period to line period.

The demodulated data formed in the above-described manner are each represented as follows:

$$BY = V_C + V_{DC} = D_{SCA}$$

$$NBY = -V_C + V_{DC} = D_{SCC}$$

$$DBY = BY - NBY = 2VC$$

$$RY = \pm V_C + V_{DC} = D_{SCB}$$

$$NRY = \mp V_C + V_{DC} = D_{SCD}$$

$$DRY = \pm RY \mp NRY = 2V_C$$

($V_C$ is the amplitude of the C signal, and $V_{DC}$ is the DC offset component of the C signal.)

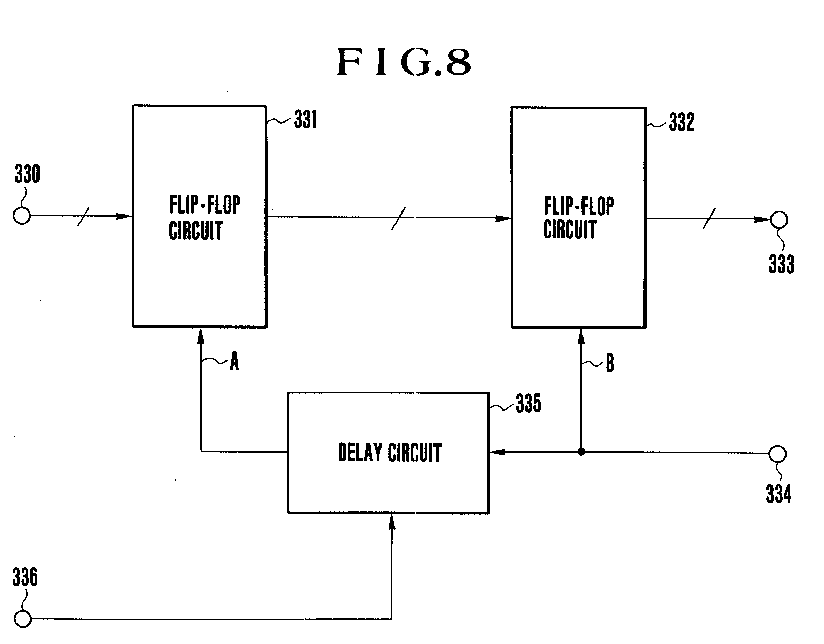

Each of the clock converting circuits 328 and 329 shown in Fig. 5 is constructed as shown in Fig. 8.

The construction shown in Fig. 8 includes a data input terminal 330, flip-flop circuits 331 and 332, a data output terminal 333, an input terminal 334 for input of a data transfer clock signal, a delay circuit 335, and an input terminal 336 for input of a clock signal for controlling the delay circuit 335.

If Tb represents the period of a data transfer clock signal inputted through the input terminal 334, Tc the period of a clock signal inputted through the input terminal 336, $t_{pd}$ the propagation delay time of each of the flip-flop circuits 331 and 332, and $t_{su}$ the data setup time of each of the flip-flop circuits 331 and 332, then the delay time, $\tau_3$, of the clock signal B of Fig. 8 with respect to the clock signal A of Fig. 8 is as follows:

$$\tau_3 > Tb - Tc - t_{su} - t_{pd}$$

$$\tau_3 \leq Tb - t_{su} - t_{pd}$$

In these expressions, since $Tc \leq Tb/2$ and $t_{pd} + t_{su}$ generally takes on an extremely small value, $t_{pd} + t_{su} \leq Tc/2$ is assumed. Therefore, $t_{pd} + t_{su} \leq \tau_3 \leq Tb$ is obtained.

Data is inputted through the input terminal 330 in synchronism with a clock signal obtained by frequency-dividing the clock signal inputted through the input terminal 336. If the frequency of the clock signal inputted through the input terminal 336 is two or more times the frequency of the data transfer clock signal inputted through the input terminal 334, the data inputted through the input terminal 330 can be transferred in synchronism with the data transfer clock signal inputted through the input terminal 334.

Accordingly, difference data in synchronized relation to a clock signal 80H CKED SC4 generated by the timing controller 325 is supplied to the input terminal 336 of Fig. 8, in the case of the clock converting circuit 328, from the adder 306, or in the case of the clock converting circuit 329, from the adder 307. Also, a clock signal 80H whose period is a predetermined multiple of that of a horizontal sync signal supplied to the input terminal 334 from the timing controller 325. Accordingly, difference data which has been subjected to clock conversion synchronized with the clock signal 80H is outputted from each of the clock converting circuits 328 and 329.

The data rate of the difference data obtained through the above-described difference processing is $2f_{sc} \doteqdot (567 + 1/2)$ fh(fh: horizontal sync frequency). Accordingly, even if the clock conversion processing is performed by each of the clock converting circuits 328 and 329 in this stage of the entire processing, a substantially visually imperceptible beat having a period of 2H and a width of 0.5 $f_{sc}$ merely appears.

The difference data subjected to the clock conversion processing in the respective clock converting circuits 328 and 329 are supplied to the adder 310 through the line memory 308 and to the adder 311 through the line memory 309.

If no phase of the demodulation axis coincides with the phase of the sampling clock signal as referred to in the description of the related art, the demodulated data obtained through the above-described processing will change from line to line. For this reason, each of the demodulated data from the clock converting circuits 328 and 329 is supplied to the corresponding one of the adders 310 and 311 in two different forms: in the case of the adder 310, demodulated data delayed by one line period by the line memory 308 and demodulated data not delayed, or in the case of the adder 311, demodulated data delayed by one line period by the line memory 309 and demodulated data not delayed. The demodulated data delayed by one line period by the line memory 308 and the demodulated data not delayed are added together by the adder 310, while the demodulated data delayed by one line period by the line memory 309 and the demodulated data not delayed are added together by the adder 311. Thus, demodulation processing including processing associated with the color burst signal is completed.

Since the data rate of the C signal is low with respect to that of a Y signal which is in general processed at the same time, in the second embodiment, the C signal is outputted selectively and in a time-division manner from the multiplexer 312 operative in accordance with the timing signals B/R and MEMCK.

In modulation, the demodulated data which have been formed in the above-described manner are formed into the following modulated data by means of the demultiplexer 313, the latch circuit 314, the data inverting latch circuit 315 and the selective data inverting/noninverting latch circuits 316 and 317.

$$BY=V_C+V_{DC'}$$

$$NBY=-V_C+V_{DC'}$$

$$RY=\pm V_C+V_{DC'}$$

$$NRY=\mp V_C+V_{DC'}$$

The modulated data thus formed are sequentially outputted by the selective output circuit 323 and the latch circuit 324 in accordance with a chroma sequence, and the output of the latch circuit 324 is restored to the C signal through D/A conversion which is not referred to herein.

The respective selective data inverting/noninverting latch circuits 316 and 317 operating by the application of the clock signals PHB and PHD extract data of opposite polarity to each other from the modulated data, and alternately reverse the phases of the respective extracted data by means of the timing signals LS and XLS. Thus, R-Y data which alternate in polarity are formed in a manner similar to that used for forming the demodulated B-Y data.

Although the level of each of the demodulated data obtained through the above-described demodulation is $2V_C$, the level of each of the modulated data required during modulation is $V_C$. If the dynamic ranges of the A/D and D/A converters employed are of the same level, the level of each of the modulated data needs to be reduced to 1/2.

However, if the level of each of the modulated data is reduced to 1/2 as described above, the cancellation of the least significant bit (LSB) occurs and the S/N of each of the modulated data will be adversely affected.

For this reason, in the second embodiment, as described above, each demodulated data is made up of 7 bits = 6 bits (the number of bits upon A/D conversion) + 1 bit, and loss of the peak-to-peak value of the data is prevented by performing the following processing during the modulation.

Such processing is performed by each of the combinational logic circuits 318, 319 and 320. The combinational logic circuit 318 is constructed as shown in Fig. 4(b) referred to previously, while each of the combinational logic circuits 319 and 320 is constructed as shown in Fig. 4(c) referred to previously.

Fig. 4(b) referred to previously is a diagram showing the construction of the combinational logic circuit 318 which consists of the AND gates 43 and 45 as well as the NAND gate 44. Fig. 4(c) referred to previously is a diagram showing the construction of each of the combinational logic circuits 319 and 320 which consists of the AND gate 43 and the NAND gate 44 as well as the AND gate 46.

From among the 7-bit data outputted from the data inverting latch circuit 315, the high-order six bits are supplied to the adder 327. The combinational logic circuit 318 shown in Fig. 4(b) controls the adder 327, thereby enabling it to add, or disabling it from adding, a carry input (marked with CI on the adder 327 of Fig. 5) to the supplied 6-bit data. Similarly, from among the 7-bit data outputted from each of the selective data inverting/noninverting latch circuits 316 and 317, the high-order six bits are supplied to the associated one of the adders 321 and 322. The combinational logic circuits 319 and 320 each of which is shown in Fig. 4(c) control the respective adders 321 and 322, thereby enabling them to add, or disabling them from adding, carry inputs (marked with CI on them in Fig. 5) to the respective supplied 6-bit data. Accordingly, it is possible to perform data inversion and form the aforesaid modulated data without the need to increase the number of bits of each of the A/D and D/A converters, that is, with the resolution of each of the A/D and D/A converters being maintained.

The modulated data with respect to the demodulated data are shown below by way of example.

| Demodulated Data | +10 | +11 | -10 | -11 |
|---|---|---|---|---|
| Modulated Data (Not Inverted) | +5 | +5 | -5 | -6 |
| Modulated Data (Inverted) | -5 | -6 | +5 | +5 |
| Peak-to-Peak Value | +10 | +11 | -10 | -11 |

The C signal is restored as an analog signal by performing D/A conversion of the modulated data formed in the above-described manner and passing the obtained analog data through a low-pass filter which is not shown. Accordingly, the symmetry of the C signal is not lost during the modulation processing.

Each of the combinational logic circuits 318, 319 and 320 also serves to prevent an overflow from occurring when processing similar to the aforesaid one is performed if demodulated data inputted for modulation indicates a minimum value (negative number whose absolute value is a maximum).

As is apparent from the above description, in the chrominance signal processing device explained as the second embodiment, during the demodulation of a carrier chrominance signal, since the difference between the C data and data of opposite phase is employed as the demodulated data for the carrier chrominance signal, it is possible to perform digital modulation/demodulation of the carrier chrominance signal without using the DC offset data of the C data. Accordingly, if a DC offset occurs near a threshold utilized in the A/D conversion, it is possible to prevent hue variations in the carrier chrominance signal due to modulation/demodulation processing from being caused by various factors such as a discrepancy between the C data and the DC offset value due to the fluctuations of the DC offset data, variations in a source voltage and allowable differences in characteristic between individual elements. In addition, it is possible to prevent degradation of the resolution of the modulation/demodulation processing.

By adding each line of demodulated data to the adjacent line of demodulated data, it is possible to prevent different demodulated data from appearing from line to line, even if the phase of a sampling clock signal does not coincide with the phase of a demodulation axis. Accordingly, it is possible to realize demodulation based on an absolute axis. In addition, since the reversal of the phase of the color burst signal from line to line in the PAL color television system is performed by reversing data polarity, the geometric arrangement of sample points is completed in the form of a 4-field sequence. Accordingly, image processing such as picture combination is facilitated.

In addition, in the second embodiment, by performing the clock conversion processing during demodulation processing, it is possible to prevent a beat from occurring during processing using a clock signal generated based on the horizontal sync frequency fh and a clock signal generated based on the subcarrier frequency $f_{sc}$.

Since the clock conversion processing is performed before the above-described line-to-line addition processing using line memories, it is possible to determine arbitrarily the number of words to be stored in each of the line memories used for demodulation processing, in accordance with the clock signal based on the horizontal sync frequency fh, irrespective of the clock signal generated based on the subcarrier frequency $f_{sc}$.

As is apparent from the above description, according to the second embodiment, it is possible to provide a chrominance signal processing device capable of converting a carrier chrominance signal into color-difference signals without degradation, or capable of converting the converted color-difference signals into the original carrier chrominance signal without degradation, by means of a simple construction.

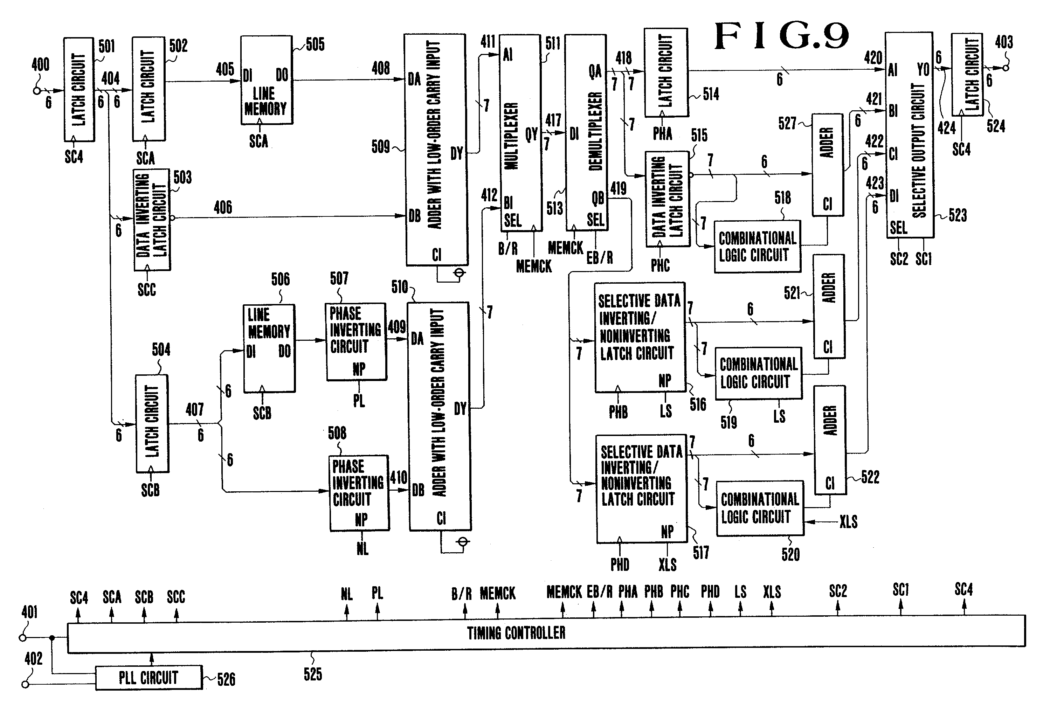

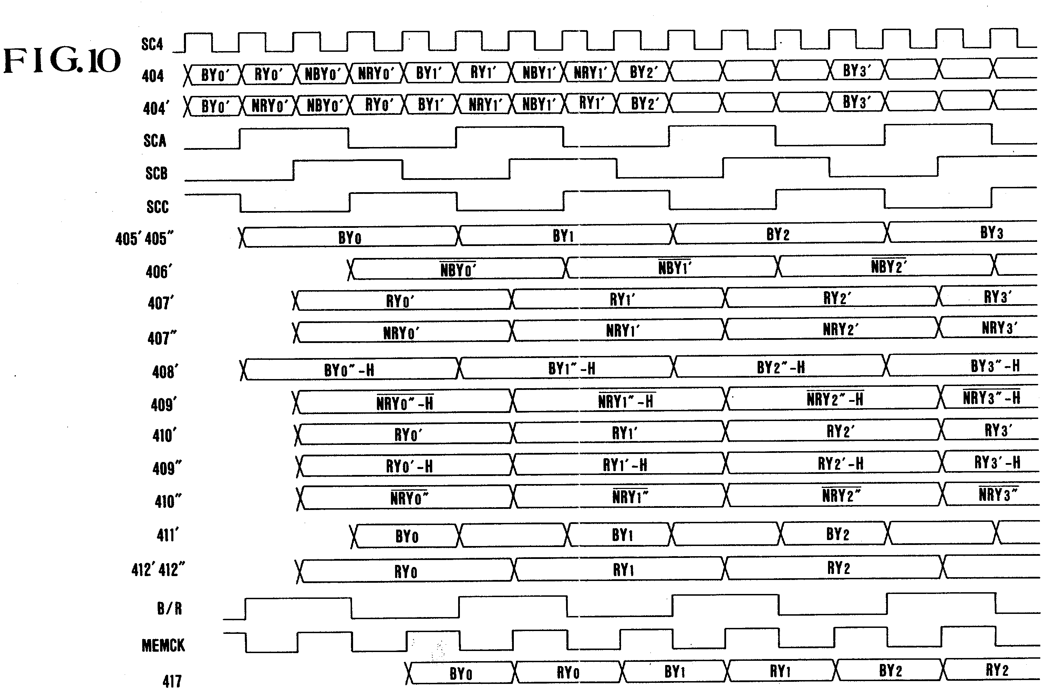

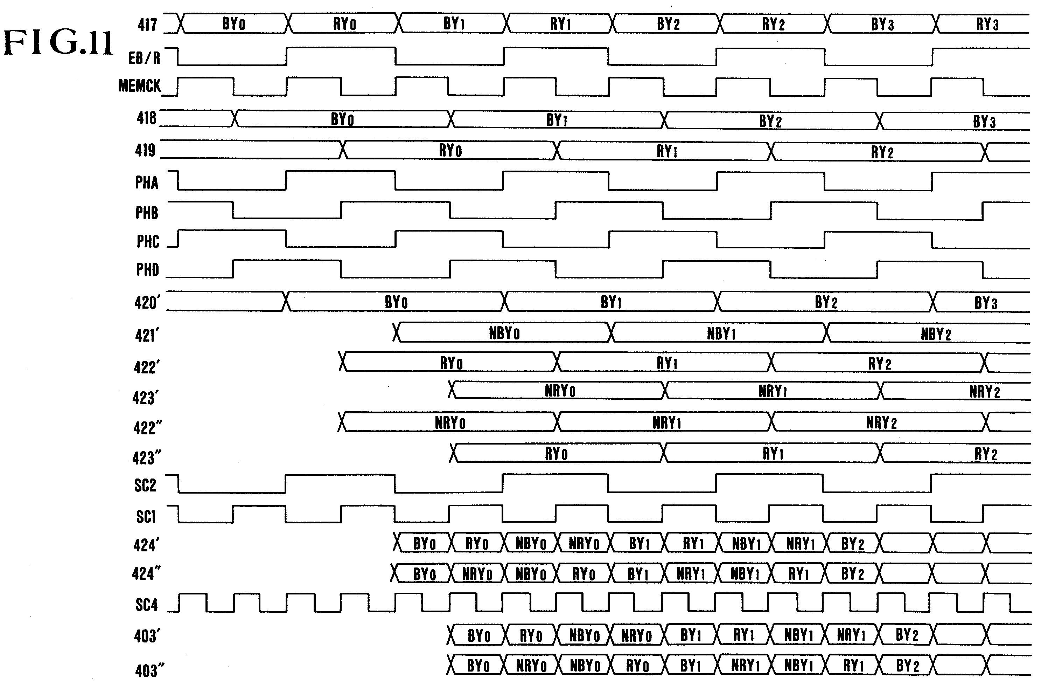

Fig. 9 is a schematic block diagram showing the construction of a third embodiment of the chrominance signal processing device to which the present invention is applied. Figs. 10 and 11 are timing charts aiding in explaining the operation of the construction shown in Fig. 9.

The chrominance signal processing device shown in Fig. 9 includes latch circuits 501, 502, 504, 514 and 524, data inverting latch circuits 503 and 515, selective data inverting/noninverting latch circuits 516 and 517, adders 509 and 510 each having a low-order carry input, line memories 505 and 506, phase inverting circuits 507 and 508, a multiplexer 511, a demultiplexer 513, combinational logic circuits 518, 519 and 520 such as those shown in Figs. 4(b) and 4(c) referred to previously, adders 521, 522 and 527, a selective output circuit 523, a timing controller 525 and a PLL circuit 526.

The chrominance signal processing device also includes an input terminal 400 for input of C data (6 bits per sample) obtained by performing A/D conversion of a C signal by means of an A/D converter which is not shown, an input terminal 401 for input of the C signal, and an input terminal 402 for input of a timing signal indicative of the period of a color burst signal obtained through a sync separating circuit or the like which is not shown.

In the chrominance signal processing device shown in Fig. 9, a color burst signal is extracted from a carrier chrominance signal inputted through the input terminal 401 by the PLL circuit 526 in accordance with a timing signal inputted through the input terminal 402. The PLL circuit 526 generates a clock signal SC4 which is phase-synchronized with four times the average phase of the color burst signal, and applies the clock signal SC4 to the latch circuit 501. By the application of the clock signal SC4, the latch circuit 501 is operated to generate C data 404. (Refer to Fig. 10. In Fig. 10, data 404' represents data for odd lines, while data 404" represents data for even lines. Similarly, the marks ' and " represent an odd line and an even line, respectively.)

The C data 404 is then applied to each of the latch circuit 502, the data inverting latch circuit 503 and the latch circuit 504. These circuits 502, 503 and 504 are respectively operated by the application of clock signals SCA, SCC and SCB each having a frequency $f_{sc}$ ($f_{sc}$: subcarrier frequency) and a predetermined phase difference with respect to the color burst signal, so that the C data 404 is divided into data of three kinds (i.e., PBY, NBY and ERY) respectively corresponding to three phases. The data PBY outputted from the latch circuit 502 is delayed by a-1H period (PBY") by the line memory 505, and is then supplied to the adder 509 together with data NBY' outputted from the data inverting latch circuit 503.

The data ERY outputted from the latch circuit 504 is delayed by a 1H period (ERY") by the line memory 506, and is then supplied to the adder 510 through the phase inverting circuit 507.

In the meantime, data ERY', outputted from the latch 504 but not delayed by a 1H period, is supplied to the adder 510 through the phase inverting circuit 508.

Accordingly, a demodulated chrominance signal is obtained from the result of subtraction of the 1H-delayed data PBY" and the data NBY' and the result of subtraction of the data ERY' and the 1H-delayed data ERY".

If it is assumed that the C data is represented as a twos (2's) complement, the aforesaid processing is represented as follows:

$$BY=PBY''-NBY'=PBY''+\overline{NBY}'+1$$

$$RY=ERY'-ERY''=ERY'+\overline{ERY}''+1$$

(when the phase of the color burst signal is 225°)

$$=-(ERY'-ERY'')=\overline{ERY}'+ERY''+1$$

(when the phase of the color burst signal is 135°)

Accordingly, the data BY is formed by inverting and outputting the data NBY' while inputting a signal of-high level to the carry input (marked with CI in Fig. 9) of the adder 509.

In the PAL color television system, since the phase of the R-Y carrier is reversed from line to line, pseudo the data RY is formed as follows. The respective phase inverting circuits 507 and 508 operating in accordance with timing signals PL and NL reverse the phases of the data ERY' and ERY" from line to line in accordance with the phase of the color burst signal, and output the resultant data. Subsequently, the data RY is formed in a manner similar to that used for forming the data BY.

Each of the phase inverting circuits 507 and 508 is constructed, for example, as shown in Fig. 4(d), and includes exclusive OR gates 47. The phase inverting circuits 507 and 508 are respectively arranged to reverse the phases of input data from line period to line period in accordance with the timing signals PL and NL which are of opposite polarity to each other and which are reversed in polarity from line period to line period.

Thus, demodulation processing including processing associated with the color burst signal is completed.

Since the data rate of the C signal is low with respect to that of a Y signal which is in general processed at the same time, the C signal is outputted selectively and in a time-division manner from the multiplexer 511 operative in accordance with the timing signals B/R and MEMCK in the second embodiment.

In modulation, the demodulated data which have been formed in the above-described manner are formed into the following modulated data by means of the demultiplexer 513, the latch circuit 514, the data inverting latch circuit 515 and the selective data inverting/noninverting latch circuits 516 and 517.

$$BY=V_C+V_{DC'}$$

$$NBY = -V_C + V_{DC'}$$

$$RY = \pm V_C + V_{DC'}$$

$$NRY = \mp V_C + V_{DC'}$$

The modulated data thus formed are sequentially outputted by the selective output circuit 523 and the latch circuit 524 in accordance with a chroma sequence, and the output of the latch circuit 524 is restored to the C signal through D/A conversion which is not referred to herein.

The respective selective data inverting/noninverting latch circuits 516 and 517 operating by the application of the clock signals PHB and PHD extract data of opposite polarity to each other from the modulated data, and alternately reverse the phases of the respective extracted data by means of the timing signals LS and XLS. Thus, R-Y data which alternate in polarity are formed in a manner similar to that used for forming the demodulated B-Y data.

Each of the selective data inverting/noninverting latch circuits 516 and 517 is constructed, for example, as shown in Fig. 4(a) referred to previously, and includes the exclusive OR gates 41 and the latch circuit 42. The selective data inverting/noninverting latch circuits 516 and 517 are respectively arranged to reverse the phases of input data from line period to line period in accordance with the timing signals LS and XLS which are of opposite polarity to each other and which are reversed in polarity from line period to line period.

Although the level of each of the demodulated data obtained through the above-described demodulation is $2V_C$, the level of each of the modulated data required during modulation is $V_C$. If the dynamic ranges of the A/D and D/A converters employed are of the same level, the level of each of the modulated data needs to be reduced to 1/2.

However, if the level of each of the modulated data is reduced to 1/2 as described above, the cancellation of the least significant bit (LSB) occurs and the S/N of each of the modulated data will be adversely affected.

For this reason, in the third embodiment, as described above, each demodulated data is made up of 7 bits = 6 bits (the number of bits upon A/D conversion) + 1 bit, and loss of the peak-to-peak value of the data is prevented by performing the following processing during the modulation.

Such processing is performed by each of the combinational logic circuits 518, 519 and 520. The combinational logic circuit 518 is constructed as shown in Fig. 4(b) referred to previously, while each of the combinational logic circuits 519 and 520 is constructed as shown in Fig. 4(c) referred to previously.

Fig. 4(b) referred to previously is a diagram showing the construction of the combinational logic circuit 518 which consists of the AND gates 43 and 45 as well as the NAND gate 44. Fig. 4(c) referred to previously is a diagram showing the construction of each of the combinational logic circuits 519 and 520 which consists of the AND gates 43 and 46 and the NAND gate 44.

From among the 7-bit data outputted from the data inverting latch circuit 515, the high-order six bits are supplied to the adder 527. The combinational logic circuit 518 shown in Fig. 4(b) controls the adder 527, thereby enabling it to add, or disabling it from adding, a carry input (marked with CI on the adder 527 of Fig. 9) to the supplied 6-bit data. Similarly, from among the 7-bit data outputted from each of the selective data inverting/noninverting latch circuits 516 and 517, the high-order six bits are supplied to the associated one of the adders 521 and 522. The combinational logic circuits 519 and 520 each of which is shown in Fig. 4(c) control the respective adders 521 and 522, thereby enabling them to add, or disabling them from adding, carry inputs (marked with CI on them in Fig. 9) to the respective supplied 6-bit data. Accordingly, it is possible to perform data inversion and form the aforesaid modulated data without the need to increase the number of bits of each of the A/D and D/A converters, that is, with the resolution of each of the A/D and D/A converters being maintained.

The modulated data with respect to the demodulated data are shown below by way of example.

**Demodulated Data**     +10     +11     -10     -11

| | | | | |
|---|---|---|---|---|
| Modulated Data (Not Inverted) | +5 | +5 | −5 | −6 |
| Modulated Data (Inverted) | −5 | −6 | +5 | +5 |
| Peak-to-Peak Value | +10 | +11 | −10 | −11 |

The C signal is restored as an analog signal by performing D/A conversion of the modulated data formed in the above-described manner and passing the obtained analog data through a low-pass filter which is not shown. Accordingly, the symmetry of the C signal is not lost due to the modulation processing.

Each of the combinational logic circuits 518, 519 and 520 also serves to prevent an overflow from occurring when processing similar to the aforesaid one is performed if demodulated data inputted for modulation indicates a minimum value (negative number whose absolute value is a maximum).

As is apparent from the above description, in the chrominance signal processing device explained as the third embodiment, during the demodulation of a carrier chrominance signal, the C data is added to data obtained by delaying data of opposite phase with the C data by one horizontal line period, thereby preparing the demodulated data for the carrier chrominance signal. It is, therefore, possible to perform digital modulation/demodulation of the carrier chrominance signal without using the DC offset data of the C data. Accordingly, if a DC offset occurs near a threshold utilized in the A/D conversion, it is possible to prevent hue variations in the carrier chrominance signal due to modulation/demodulation processing from being caused by various factors such as a discrepancy between the C data and the DC offset value due to the fluctuations of the DC offset data, variations in a source voltage and allowable differences in characteristic between individual elements. In addition, it is possible to prevent degradation of the resolution of the modulation/demodulation processing.

By adding each line of demodulated data to the adjacent line of demodulated data, it is possible to prevent different demodulated data from appearing from line to line, even if the phase of a sampling clock signal does not coincide with the phase of the demodulation axis. Accordingly, it is possible to realize demodulation based on an absolute axis. In addition, since the reversal of the phase of the color burst signal from line to line in the PAL color television system is performed by reversing data polarity, the geometric arrangement of sample points is completed in the form of a 4-field sequence. Accordingly, image processing such as picture combination is facilitated.

In addition, according to the third embodiment, a demodulation/modulation circuit for a chrominance signal can be made up of a reduced number of latch circuits and adders, and the capacity of each line memory used may be 1 bit × the number of words per line.

Although in the third embodiment the data PBY is delayed by a 1H period by means of the line memory 505 during the demodulation of the data BY, it is also possible to adopt an arrangement in which the data NBY is delayed by a 1H period.

Although in the third embodiment the data ERY extracted by the latch circuit 504 is employed for demodulation of the data RY, it is also possible to employ the data DRY extracted by a latch circuit whose latch operation is controlled by a clock signal which is 180° out of phase with the data ERY. In this case, the phase relationship between the timing signals PL and NL each of which reverses in phase in accordance with the phase of the color burst signal may be made opposite to the phase relationship used in the third embodiment.

As is apparent from the above description, according to the third embodiment, it is possible to provide a chrominance signal processing device capable of converting a carrier chrominance signal into color-difference signals without degradation, or capable of converting the converted color-difference signals into the original carrier chrominance signal without degradation, by means of a simple construction.

A chrominance signal processing device according to this invention is a device for processing a carrier chrominance signal. In the chrominance signal processing device, a plurality of kinds of sampling clock signals having predetermined phase differences relative to each other are generated on the basis of a color burst signal contained in a carrier chrominance signal, and a plurality of kinds of sample data are formed by sampling the carrier chrominance signal in accordance with the plurality of kinds of sampling clock signals thus generated. From among the plurality of kinds of sample data thus formed, two kinds of sample data formed by sampling the carrier chrominance signal in accordance with two kinds of sampling clock signals each having a 180° phase difference relative to the other, are added together to form added data. The added data is added to data delayed by one horizontal synchronizing period, and the resultant data is outputted. In the chrominance signal processing device, it is possible to convert the carrier chrominance signal into color-difference signals without degradation.

## Claims

1. A chrominance signal processing device for demodulating a carrier chrominance signal, comprising:

   (A) sampling clock signal generating means (25) for generating a plurality of kinds of sampling clock signals (SCA, SCB, SCC, SCD) having predetermined phase differences relative to each other, on the basis of a color burst signal contained in a carrier chrominance signal;

   (B) sample data forming means (2,3,4,5) for forming a plurality of kinds of sample data by sampling the carrier chrominance signal in accordance with the plurality of kinds of sampling clock signals generated by said sampling clock signal generating means, and outputting the plurality of kinds of sample data; characterised in that it further comprises

   (C) first added data forming means (6,7) for forming first added data (109,110) by adding together two kinds of sample data from among the plurality of kinds of sample data outputted from said sample data forming means, and outputting the first added data, the two kinds of sample data being formed by sampling the carrier chrominance signal in said sample data forming means in accordance with two kinds of sampling clock signals each having a 180° phase difference relative to the other generated by said sampling clock signal generating means,

   (D) delay means (8,9) for delaying the first added data (109,110) outputted from said first added data forming means (6,7) by one horizontal synchronizing period and outputting the delayed first added data; and

   (E) second added data forming means (10, 11) for forming second added data (115, 116) by adding the first added data outputted from said first added data forming means to the delayed first added data outputted from said delay means, and outputting the second added data as demodulated chrominance data (BY, RY).

2. A chrominance signal processing device according to claim 1, wherein said sampling clock signal generating means is arranged to generate, on the basis of the color burst signal contained in the carrier chrominance signal, four kinds of sampling clock signals each of which has a frequency equal to that of the color burst signal of the carrier chrominance signal and which are 90° out of phase with one another.

3. A chrominance signal processing device according to claim 2, wherein said sample data forming means includes:

   (a) first sample data forming means for forming first sample data by sampling the carrier chrominance signal in accordance with a first sampling clock signal generated by said sampling clock signal generating means, and outputting the first sample data;

   (b) second sample data forming means for forming second sample data by sampling the carrier chrominance signal in accordance with a second sampling clock signal having a 180° phase difference relative to the first sampling clock signal generated by said sampling clock signal generating means, and outputting the second sample data;

   (c) third sample data forming means for forming third sample data by sampling the carrier chrominance signal in accordance with a third sampling clock signal having a 90° phase difference relative to the first sampling clock signal generated by said sampling clock signal generating means, and outputting the third sample data; and

   (d) fourth sample data forming means for forming fourth sample data by sampling the carrier chrominance signal in accordance with a fourth sampling clock signal having a 180° phase difference relative to the third sampling clock signal generated by said sampling clock signal generating means, and outputting the fourth sample data.

4. A chrominance signal processing device according to claim 3, wherein said first added data forming means is arranged to form the first added data by adding the first sample data outputted from said first sample data forming means to the second sample data outputted from said second sample data forming means, and output the first added data.

5. A chrominance signal processing device according to claim 3, wherein said first added data forming means is arranged to form the first added data by adding the third sample data outputted from said third sample data forming means to the fourth sample data outputted from said fourth sample data forming means, and output the first added data.

6. A chrominance signal processing device for demodulating a carrier chrominance signal, comprising:

(A) sampling clock signal generating means (325) for generating a plurality of kinds of sampling clock signals (SCA, SCB, SCC, SCD) having predetermined phase differences relative to each other, on the basis of a color burst signal contained in a carrier chrominance signal;

(B) sample data forming means (302, 303, 304, 305) for forming a plurality of kinds of sample data by sampling the carrier chrominance signal in accordance with the plurality of kinds of sampling clock signals generated by said sampling clock signal generating means, and outputting the plurality of kinds of sample data; characterised in that further comprises

(C) first added data forming means (306, 307) for forming first added data by adding together two kinds of sample data from among the plurality of kinds of sample data outputted from said sample data forming means, and outputting the first added data, the two kinds of sample data being formed by sampling the carrier chrominance signal in said sample data forming means in accordance with two kinds of sampling clock signals each having a 180° phase difference relative to the other generated by said sampling clock signal generating means;

(D) data rate and clock converting means (328, 329) for converting a data rate and clock of the first added data outputted from said first added data forming means, and outputting the converted first added data in synchronism with a data transfer clock;

(E) delay means (308, 309) for delaying the first added data outputted from said data rate converting means by one horizontal synchronizing period and outputting the delayed first added data; and

(F) second added data forming means (310, 311) for forming second added data by adding the first added data outputted from said data rate converting means to the delayed first added data outputted from said delay means, and outputting the second added data as demodulated chrominance data.

7. A chrominance signal processing device according to claim 6, wherein said sampling clock signal generating means is arranged to generate, on the basis of the color burst signal contained in the carrier chrominance signal, four kinds of sampling clock signals each of which has a frequency equal to that of the color burst signal of the carrier chrominance signal and which are 90° out of phase with one another.

8. A chrominance signal processing device according to claim 7, wherein said sample data forming means includes:

(a) first sample data forming means for forming first sample data by sampling the carrier chrominance signal in accordance with a first sampling clock signal generated by said sampling clock signal generating means, and outputting the first sample data;

(b) second sample data forming means for forming second sample data by sampling the carrier chrominance signal in accordance with a second sampling clock signal having a 180° phase difference relative to the first sampling clock signal generated by said sampling clock signal generating means, and outputting the second sample data;

(c) third sample data forming means for forming third sample data by sampling the carrier chrominance signal in accordance with a third sampling clock signal having a 90° phase difference relative to the first sampling clock signal generated by said sampling clock signal generating means, and outputting the third sample data; and

(d) fourth sample data forming means for forming fourth sample data by sampling the carrier chrominance signal in accordance with a fourth sampling clock signal having a 180° phase difference relative to the third sampling clock signal generated by said sampling clock signal generating means, and outputting the fourth sample data.

9. A chrominance signal processing device according to claim 8, wherein said first added data forming means is arranged to form the first added data by adding the first sample data outputted from said first sample data forming means to the second sample data outputted from said second sample data forming means, and output the first added data.

10. A chrominance signal processing device according to claim 8, wherein said first added data forming means is arranged to form the first added data by adding the third sample data outputted from said third sample data forming means to the fourth sample data outputted from said fourth sample data forming means, and output the first added data.

11. A chrominance signal processing device for demodulating a carrier chrominance signal, comprising:

(A) sampling clock signal generating means (525) for generating a plurality of kinds of sampling clock signals (SCA, SCB, SCC) having predetermined phase differences relative to each other, on the basis of a color burst signal contained in a carrier chrominance signal;

(B) sample data forming means (501) for forming a plurality of kinds of sample data by sampling the carrier chrominance signal in accordance with the plurality of kinds of sampling clock signals generated by said sampling clock signal generating means, and outputting the plurality of kinds of sample data; characterised in taht it further comprises:

(C) first sample data extracting means (502) for extracting first sample data from among the plurality of kinds of sample data outputted from said sample data forming means and outputting the first sample data, the first sample data being formed by sampling the carrier chrominance signal in said sample data forming means in accordance with a first sampling clock signal generated by said sampling clock signal generating means;

(D) second sample data extracting means (503) for extracting second sample data from among the plurality of kinds of sample data outputted from said sample data forming means and outputting the second sample data, the second sample data being formed by sampling the carrier chrominance signal in said sample data forming means in accordance with a second sampling clock signal having a 180° phase difference relative to the first sampling clock signal generated by said sampling clock signal generating means;

(E) third sample data extracting means (504) for extracting third sample data from among the plurality of kinds of sample data outputted from said sample data forming means and outputting the third sample data, the third sample data being formed by sampling the carrier chrominance signal in said sample data forming means in accordance with a third sampling clock signal having a 90° phase difference relative to the first sampling clock signal generated by said sampling clock signal generating means;

(F) first delay means (505) for delaying the first sample data outputted from said first sample data extracting means by one horizontal synchronizing period and outputting the delayed first sample data;

(G) first added data forming means (509) for forming first added data by adding the first sample data outputted from said first delay means to the second sample data outputted from said second sample data extracting means, and outputting the first added data;

(H) second delay means (506) for delaying the third sample data outputted from said third sample data extracting means by one horizontal synchronizing period and outputting the delayed third sample data;

(I) second added data forming means (510) for forming second added data by adding the third sample data outputted from said second delay means to the third sample data outputted from said third sample data extracting means, and outputting the second added data; and

(J) data outputting means (511) for receiving the first added data outputted from said first added data forming means and the second added data outputted from said second added data forming means, and outputting the received first added data and the received second added data alternately for each horizontal synchronizing period as demodulated chrominance data.

12. A chrominance signal processing device according to claim 11, wherein said sample data forming means includes:

(a) first sample data forming means for forming first sample data by sampling the carrier chrominance signal in accordance with a first sampling clock signal generated by said sampling clock signal generating means, and outputting the first sample data;

(b) second sample data forming means for forming second sample data by sampling the carrier chrominance signal in accordance with a second sampling clock signal having a 180° phase difference relative to the first sampling clock signal generated by said sampling clock signal generating means, and outputting the second sample data; and

(c) third sample data forming means for forming third sample data by sampling the carrier chrominance signal in accordance with a third sampling clock signal having a 90° phase difference relative to the first sampling clock signal generated by said sampling clock signal generating means, and outputting the third sample data.

**Patentansprüche**

1. Chrominanzsignal-Verarbeitungsschaltung zur Demodulation eines Chrominanzträgersignals, mit:

(A) Abtasttaktsignal-Erzeugungsmitteln (25) zur Erzeugung mehrerer Arten von Abtasttaktsignalen (SCA, SCB, SCC, SCD) mit vorbestimmten Phasendifferenzen untereinander auf der Grundlage eines im Chrominanzträgersignal enthaltenen Farbburstsignals;

(B) Abtastdaten-Erzeugungsmitteln (2, 3, 4, 5) zur Erzeugung mehrerer Arten von Abtastdaten durch Abtastung des Chrominanzträgersignals gemäß den Arten der vom Abtasttaktsignal-Erzeugungsmittel erzeugten Abtasttaktsignale, und zur Abgabe der Abtastdaten mehrerer Arten; **dadurch gekennzeichnet,** daß des weiteren vorgesehen sind:

(C) erste Zusatzdaten-Erzeugungsmittel (6, 7) zur Erzeugung erster Zusatzdaten (109, 110) durch Zusammenfügen zweier Arten von Abtastdaten aus den vom Abtastdaten-Erzeugungsmittel ausgegebenen Abtastdaten mehrerer Arten und zur Abgabe der ersten Zusatzdaten, wobei die beiden Arten von Abtastdaten erzeugt werden durch Abtastung des Chrominanzträgersignals in den Abtastdaten-Erzeugungsmitteln gemäß zwei Arten von durch das Abtasttaktsignal-Erzeugungsmittel erzeugten Abtasttaktsignalen, die jeweils eine Phasendifferenz von 180° untereinander haben,

(D) Verzögerungsmittel (8, 9) zur Verzögerung der von den Zusatzdaten-Erzeugungsmitteln (6, 7) kommenden ersten Zusatzdaten (109, 110) um eine Horizontalsynchronperiode und zur Abgabe der verzögerten ersten Zusatzdaten; und

(E) zweite Zusatzdaten-Erzeugungsmittel (10, 11) zur Erzeugung zweiter Zusatzdaten (115, 116) durch Hinzufügen der von den ersten Zusatzdaten-Erzeugungsmitteln kommenden ersten Zusatzdaten zu den vom Verzögerungsmittel kommenden verzögerten ersten Zusatzdaten und zur Abgabe der zweiten Zusatzdaten als demodulierte Chrominanzdaten (BY, RY).

2. Chrominanzsignal-Verarbeitungsschaltung nach Anspruch 1, deren Abtasttaktsignal-Erzeugungsmittel eingerichtet sind zur Erzeugung von vier Arten von Abtasttaktsignalen auf der Grundlage des im Chrominanzträgersignal enthaltenen Farbburstsignals, von denen jedes eine Frequenz hat, die der des Farbburstsignals des Chrominanzträgersignals gleich ist, und die untereinander um 90° phasenverschoben sind.

3. Chrominanzsignal-Verarbeitungsschaltung nach Anspruch 2, dessen Abtastdaten-Erzeugungsmittel ausgestattet ist mit:

(a) ersten Abtastdaten-Erzeugungsmitteln zur Erzeugung erster Abtastdaten durch Abtastung des Chrominanzträgersignals gemäß einem ersten, vom Abtasttaktsignal-Erzeugungsmittel erzeugten Abtasttaktsignal und zur Abgabe der ersten Abtastdaten;

(b) zweite Abtastdaten-Erzeugungsmittel zur Erzeugung zweiter Abtastdaten durch Abtastung des Chrominanzträgersignals gemäß einem zweiten Abtasttaktsignal mit einer 180°-Phasendifferenz relativ zum ersten, vom Abtasttaktsignal-Erzeugungsmittel kommenden Abtasttaktsignal und zur Abgabe der zweiten Abtastdaten;

(c) dritte Abtastdaten-Erzeugungsmittel zur Erzeugung dritter Abtastdaten durch Abtastung des Chrominanzträgersignals gemäß einem dritten Abtasttaktsignal mit einer 90°-Phasendifferenz relativ zum ersten, vom Abtasttaktsignal-Erzeugungsmittel kommenden Abtasttaktsignal und zur Abgabe der dritten Abtastdaten; und

(d) vierte Abtastdaten-Erzeugungsmittel zur Erzeugung vierter Abtastdaten durch Abtastung des Chrominanzträgersignals gemäß einem vierten Abtasttaktsignal mit einer 180°-Phasendifferenz relativ zum dritten, vom Abtasttaktsignal-Erzeugungsmittel kommenden Abtasttaktsignal und zur Abgabe der vierten Abtastdaten.

4. Chrominanzsignal-Verarbeitungsschaltung nach Anspruch 3, dessen Zusatzdaten-Erzeugungsmittel eingerichtet ist zur Erzeugung der ersten Zusatzdaten durch Hinzufügen der ersten, vom ersten Abtastdaten-Erzeugungsmittel kommenden Abtastdaten zu den zweiten, vom zweiten Abtastdaten-Erzeugungsmittel kommenden Abtastdaten und zur Abgabe der ersten Zusatzdaten.

5. Chrominanzsignal-Verarbeitungsschaltung nach Anspruch 3, dessen erstes Zusatzdaten-Erzeugungsmittel eingerichtet ist zur Erzeugung der ersten Zusatzdaten durch Hinzufügen der dritten, vom dritten Abtastdaten-Erzeugungsmittel kommenden Abtastdaten zu den vierten, vom vierten Abtastdaten-Erzeugungsmittel kommenden Abtastdaten und zur Abgabe der ersten Zusatzdaten.

6. Chrominanzsignal-Verarbeitungsschaltung zur Demodulation eines Chrominanzträgersignals, mit:

(A) Abtasttaktsignal-Erzeugungsmitteln (325) zur Erzeugung mehrerer Arten von Abtasttaktsignalen (SCA, SCB, SCC, SCD) mit vorbestimmter Phasendifferenz relativ zueinander auf der Grundlage eines in einem Chrominanzträgersignal enthaltenen Farbburstsignals;

(B) Abtastdaten-Erzeugungsmittel (302, 303, 304, 305) zur Bildung mehrerer Arten von Abtastdaten durch Abtastung des Chrominanzträgersignals gemäß der vom Abtasttaktsignal-Erzeugungsmittel kommenden Abtasttaktsignale verschiedener Arten und zur Abgabe der Abtastdaten mehrerer Arten;

**dadurch gekennzeichnet,** daß des weiteren vorgesehen sind:

(C) erste Zusatzdaten-Erzeugungsmittel (306, 307) zur Erzeugung erster Zusatzdaten durch Zusammenfügen zweier Arten von Abtastdaten aus den vom Abtastdaten-Erzeugungsmittel kommenden Abtastdaten verschiedener Arten und zur Abgabe der ersten Zusatzdaten, wobei die beiden Arten von Abtastdaten erzeugt werden durch Abtastung des Chrominanzträgersignals im Abtastdaten-Erzeugungsmittel gemäß zweier Arten von vom Abtasttaktsignal-Erzeugungsmittel erzeugten Abtasttaktsignalen, die jeweils eine 180°-Phasendifferenz relativ zueinander haben;

(D) Datenrate- und Taktumsetzmittel (328, 329) zur Umsetzung einer Datenrate und eines Takts der ersten, vom Zusatzdaten-Erzeugungsmittel kommenden Zusatzdaten und zur Abgabe der umgesetzten ersten Zusatzdaten synchron mit einem Datenübertragungstakt;

(E) Verzögerungsmittel (308, 309) zur Verzögerung der ersten, vom Datenrate- Umsetzmittel kommenden Zusatzdaten um eine Horizontalsynchronperiode und zur Abgabe der verzögerten Zusatzdaten; und

(F) zweite Zusatzdaten-Erzeugungsmittel (310, 311) zur Erzeugung zweiter Zusatzdaten durch Hinzufügen der ersten, vom Datenrate-Umsetzmittel kommenden Zusatzdaten zu den verzögerten ersten, vom Verzögerungsmittel kommenden Zusatzdaten und zur Abgabe der zweiten Zusatzdaten als demodulierte Chrominanzdaten.

7. Chrominanzsignal-Verarbeitungsschaltung nach Anspruch 6, dessen Abtasttaktsignal-Erzeugungsmittel eingerichtet ist zur Erzeugung vierer Arten von Abtastsignalen auf der Grundlage des im Chrominanzträgersignal enthaltenen Farbburstsignals, von denen jede eine Frequenz hat, die derjenigen des Farbburstsignals des Chrominanzträgersignals gleich ist, und die untereinander um 90° phasenverschoben sind.

8. Chrominanzsignal-Verarbeitungsschaltung nach Anspruch 7, dessen Abtastdaten-Erzeugungsmittel ausgestattet ist mit:

(a) ersten Abtastdaten-Erzeugungsmitteln zur Erzeugung erster Abtastdaten durch Abtastung des Chrominanzträgersignals gemäß einem ersten, vom Abtasttaktsignal-Erzeugungsmittel erzeugten Abtasttaktsignal und zur Abgabe der ersten Abtastdaten;

(b) zweiten Abtastdaten-Erzeugungsmitteln zur Erzeugung zweiter Abtastdaten durch Abtastung des Chrominanzträgersignals gemäß einem zweiten Abtasttaktsignal mit einer 180°-Phasendifferenz relativ zum ersten, vom Abtasttaktsignal-Erzeugungsmittel erzeugten Abtasttaktsignal und zur Abgabe der zweiten Abtastdaten;

(c) dritte Abtastdaten-Erzeugungsmittel zur Erzeugung dritter Abtastdaten durch Abtastung des Chrominanzträgersignals gemäß einem dritten Abtasttaktsignal mit einer 90°-Phasendifferenz relativ zum ersten, vom Abtasttaktsignal-Erzeugungsmittel erzeugten Abtasttaktsignal und zur Abgabe der dritten Abtastdaten; und mit

(d) vierten Abtastdaten-Erzeugungsmitteln zur Erzeugung vierter Abtastdaten durch Abtastung des Chrominanzträgersignals gemäß einem vierten Taktsignal mit einer 180°-Phasendifferenz relativ zum dritten, vom Abtasttaktsignal-Erzeugungsmittel erzeugten Abtasttaktsignal und zur Abgabe der vierten Abtastdaten.

9. Chrominanzsignal-Verarbeitungsschaltung nach Anspruch 8, dessen erstes Zusatzdaten-Erzeugungsmittel eingerichtet ist zur Erzeugung der ersten Zusatzdaten durch Hinzufügen der ersten, vom ersten Abtastdaten-Erzeugungsmittel kommenden Abtastdaten zu den zweiten, vom zweiten Abtastdaten-Erzeugungsmittel kommenden Abtastdaten und zur Abgabe der ersten Zusatzdaten.

10. Chrominanzsignal-Erzeugungsschaltung nach Anspruch 8, dessen erstes Zusatzdaten-Erzeugungsmittel eingerichtet ist zur Erzeugung der ersten Zusatzdaten durch Hinzufügen der dritten, vom dritten Abtastdaten-Erzeugungsmittel kommenden Abtastdaten zu den vierten, vom vierten Abtastdaten-Erzeugungsmittel kommenden Abtastdaten und zur Abgabe der ersten Zusatzdaten.

11. Chrominanzsignal-Verarbeitungsschaltung zur Demodulation eines Chrominanzträgersignals, mit:

(A) Abtasttaktsignal-Erzeugungsmitteln (525) zur Erzeugung von Abtasttaktsignalen (SCA, SCB, SCC) verschiedener Arten mit vorbestimmten Phasendifferenz zueinander auf der Grundlage eines in einem Chrominanzträgersignal enthaltenen Farbburstsignals;

(B) Abtastdaten-Erzeugungsmittel (501) zur Bildung von Abtastdaten verschiedenen Arten durch Abtastung des Chrominanzträgersignals gemäß der verschiedenen Arten von vom Abtasttaktsignal-Erzeugungsmittel erzeugten Abtasttaktsignalen und zur Abgabe der verschiedenen Arten von Abtastdaten; **dadurch gekennzeichnet,** daß des weiteren vorgesehen sind:

(C) erste Abtastdaten-Auslesemittel (502) zum Auslesen erster Abtastdaten aus den vom Abtastdaten-Erzeugungsmittel kommenden Abtastdaten verschiedener Arten und zur Abgabe der ersten Abtastdaten, wobei die ersten Abtastdaten durch Abtastung des Chrominanzträgersignals im Abtastdaten-Erzeugungsmittel gemäß einem ersten, vom Abtasttaktsignal-Erzeugungsmittel erzeugten Abtasttaktsignal gebildet werden;

(D) zweite Abtastdaten-Auslesemittel (503) zum Auslesen zweiter Abtastdaten aus den vom Abtastdaten-Erzeugungsmittel kommenden Abtastdaten mehrerer Arten und zur Abgabe der zweiten Abtastdaten, wobei die zweiten Abtastdaten gebildet werden durch Abtastung des Chrominanzträgersignals im Abtastdaten-Erzeugungsmittel gemäß einem zweiten Abtasttaktsignal mit einer 180°-Phasendifferenz relativ zum ersten, vom Abtasttaktsignal-Erzeugungsmittel erzeugten Abtasttaktsignal;

(E) dritte Abtastdaten-Auslesemittel (504) zum Auslesen dritter Abtastdaten aus den verschiedenen Arten von vom Abtastdaten-Erzeugungsmittel kommenden Abtastdaten und zur Abgabe der dritten Abtastdaten, wobei die dritten Abtastdaten gebildet werden durch Abtastung des Chrominanzträgersignals im Abtastdaten-Erzeugungsmittel gemäß einem dritten Abtasttaktsignal mit einer 90°-Phasendifferenz relativ zum ersten, vom Abtasttaktsignal-Erzeugungsmittel erzeugten Abtasttaktsignal;

(F) erste Verzögerungsmittel (505) zur Verzögerung der ersten, vom ersten Abtastdaten-Auslesemittel kommenden Abtastdaten um eine Horizontalsynchronperiode und zur Abgabe der verzögerten ersten Abtastdaten;

(G) erste Zusatzdaten-Erzeugungsmittel (509) zur Erzeugung erster Zusatzdaten durch Hinzufügen der ersten, vom ersten Verzögerungsmittel kommenden Abtastdaten zu den zweiten, vom zweiten Abtastdaten-Auslesemittel kommenden Abtastdaten und zur Abgabe der ersten Zusatzdaten;

(H) zweite Verzögerungsmittel (506) zur Verzögerung der dritten, vom dritten Abtastdaten-Auslesemittel kommenden Abtastdaten um eine Horizontalsynchronperiode und zur Abgabe der verzögerten dritten Abtastdaten;

(I) zweite Zusatzdaten-Erzeugungsmittel (510) zur Erzeugung zweiter Zusatzdaten durch Hinzufügen der dritten, vom zweiten Verzögerungsmittel kommenden Abtastdaten zu den dritten, vom dritten Abtastdaten-Auslesemittel kommenden Abtastdaten und zur Abgabe der zweiten Zusatzdaten; und

(J) Datenausgabemittel (511) zum Empfang der ersten, vom Zusatzdaten-Erzeugungsmittel kommenden Zusatzdaten und den zweiten, vom zweiten Zusatzdaten-Erzeugungsmittel kommenden Zusatzdaten und zur Abgabe der empfangenen ersten Zusatzdaten und der empfangenen zweiten Zusatzdaten abwechselnd in jeder Horizontalsynchronperiode als demodulierte Chrominanzdaten.

**12.** Chrominanzsignal-Verarbeitungsschaltung nach Anspruch 11, dessen Abtastdaten-Erzeugungsmittel ausgestattet ist mit:

(a) ersten Abtastdaten-Erzeugungsmitteln zur Erzeugung erster Abtastdaten durch Abtasten des Chrominanzträgersignals gemäß einem ersten, vom Abtasttaktsignal-Erzeugungsmittel erzeugten Abtasttaktsignal und zur Abgabe der ersten Abtastdaten;

(b) zweiten Abtastdaten-Erzeugungsmitteln zur Erzeugung zweiter Abtastdaten durch Abtasten des Chrominanzträgersignals gemäß einem zweiten Abtasttaktsignal mit einer 180°-Phasendifferenz relativ zum ersten, vom Abtasttaktsignal-Erzeugungsmittel erzeugten Abtasttaktsignal und zur Abgabe der zweiten Abtastdaten; und

(c) dritten Abtastdaten-Erzeugungsmitteln zur Erzeugung dritter Abtastdaten durch Abtastung des Chrominanzträgersignals gemäß einem dritten Abtasttaktsignal mit einer 90°-Phasendifferenz relativ zum ersten, vom Abtasttaktsignal-Erzeugungsmittel erzeugten Abtasttaktsignal und zur Abgabe der dritten Abtastdaten.

## Revendications

**1.** Dispositif de traitement du signal de chrominance destiné à démoduler un signal de chrominance de la porteuse, comprenant :

(A) un moyen de génération de signal d'horloge d'échantillonnage (25) destiné à générer une pluralité de types de signaux d'horloge d'échantillonnage (SCA, SCB, SCC, SCD) présentant des différences de phase prédéterminées relativement l'un à l'autre, sur la base d'un signal de salve de couleur contenu dans un signal de chrominance de la porteuse,

(B) un moyen de formation de données d'échantillon (2, 3, 4, 5) destiné à former une pluralité de types de données d'échantillon en échantillonnant le signal de chrominance de la porteuse conformément à la pluralité de types de signaux d'horloge d'échantillonage générés par ledit moyen de génération de signal d'horloge d'échantillonnage, et sortant la pluralité de types de données d'échantillon, caractérisé en ce qu'il comprend en outre

(C) un moyen de formation de premières données ajoutées (6, 7) destiné à former des premières données

EP 0 518 256 B1

ajoutées (109, 110) en ajoutant ensemble deux types de données d'échantillon provenant de la pluralité de types de données d'échantillon qui sort dudit moyen de formation de données d'échantillon, et sortant les premières données ajoutées, les deux types de données d'échantillon étant formés en échantillonnant le signal de chrominance de la porteuse dans ledit moyen de formation de données d'échantillon conformément à deux types de signaux d'horloge d'échantillonnage présentant chacun une différence de phase de 180° par rapport à l'autre, générés par ledit moyen de génération de signal d'horloge d'échantillonnage,

(D) un moyen de retard (8, 9) destiné à retarder les premières données ajoutées (109, 110) qui sortent dudit moyen de formation de premières données ajoutées (6, 7) d'une période de synchronisation horizontale et sortant les premières données ajoutées retardées, et

(E) un moyen de formation de secondes données ajoutées (10, 11) destiné à former des secondes données ajoutées (115, 116) en additionnant les premières données ajoutées qui sortent dudit moyen de formation de premières données ajoutées aux premières données ajoutées retardées qui sortent dudit moyen de retard, et sortant les secondes données ajoutées, sous forme de données de chrominance démodulées (BY, RY).

2. Dispositif de traitement du signal de chrominance selon la revendication 1, dans lequel ledit moyen de génération de signal d'horloge d'échantillonnage est agencé de façon à générer, sur la base du signal de salve de couleur contenu dans le signal de chrominance de la porteuse, quatre types de signaux d'horloge d'échantillonnage, dont chacun présente une fréquence égale à celle du signal de salve de couleur du signal de chrominance de la porteuse et qui sont déphasés de 90° l'un par rapport à l'autre.

3. Dispositif de traitement du signal de chrominance selon la revendication 2, dans lequel ledit moyen de formation de données d'échantillon comprend :

(a) un moyen de formation de premières données d'échantillon destiné à former des premières données d'échantillon en échantillonnant le signal de chrominance de la porteuse conformément à un premier signal d'horloge d'échantillonnage généré par ledit moyen de génération de signal d'horloge d'échantillonnage, et sortant les premières données d'échantillon,

(b) un moyen de formation de secondes données d'échantillon destiné à former des secondes données d'échantillon en échantillonnant le signal de chrominance de la porteuse conformément à un second signal d'horloge d'échantillonnage présentant une différence de phase de 180° par rapport au premier signal d'horloge d'échantillonnage généré par ledit moyen de génération de signal d'horloge d'échantillonnage, et sortant les secondes données d'échantillon,

(c) un moyen de formation de troisièmes données d'échantillon destiné à former des troisièmes données d'échantillon en échantillonnant le signal de chrominance de la porteuse conformément à un troisième signal d'horloge d'échantillonnage présentant une différence de phase de 90° par rapport au premier signal d'horloge d'échantillonnage généré par ledit moyen de génération de signal d'horloge d'échantillonnage, et sortant les troisièmes données d'échantillon, et

d) un moyen de formation de quatrièmes données d'échantillon destiné à former des quatrièmes données d'échantillon en échantillonnant le signal de chrominance de la porteuse conformément à un quatrième signal d'horloge d'échantillonnage présentant une différence de phase de 180° par rapport au troisième signal d'horloge d'échantillonnage généré par ledit moyen de génération de signal d'horloge d'échantillonnage, et sortant les quatrièmes données d'échantillon.

4. Dispositif de traitement de signal de chrominance selon la revendication 3, dans lequel ledit moyen de formation de premières données ajoutées est agencé de façon à former les premières données ajoutées en additionnant les premières données d'échantillon qui sortent dudit moyen de formation de premières données d'échantillon aux secondes données d'échantillon qui sortent dudit moyen de formation de secondes données d'échantillon, et sort les premières données ajoutées.

5. Dispositif de traitement du signal de chrominance selon la revendication 3, dans lequel ledit moyen de formation de premières données ajoutées est agencé pour former les premières données ajoutées en additionnant les troisièmes données d'échantillon qui sortent dudit moyen de formation de troisièmes données d'échantillon aux quatrièmes données d'échantillon qui sortent dudit moyen de formation de quatrièmes données d'échantillon, et sort les premières données ajoutées.

6. Dispositif de traitement du signal de chrominance destiné à démoduler un signal de chrominance de la porteuse, comprenant :

22

(A) un moyen de génération de signal d'horloge d'échantillonnage (325) destiné à générer une pluralité de types de signaux d'horloge d'échantillonnage (SCA, SCB, SCC, SCD) présentant des différences de phase prédéterminées relativement l'un à l'autre, sur la base d'un signal de salve de couleur contenu dans un signal de chrominance de la porteuse,

(B) un moyen de formation de données d'échantillon (302, 303, 304, 305) destiné à former une pluralité de types de données d'échantillon en échantillonnant le signal de chrominance de la porteuse conformément à la pluralité de types de signaux d'horloge d'échantillonnage générés par ledit moyen de génération de signal d'horloge d'échantillonnage, et sortant la pluralité de types de données d'échantillon, caractérisé en ce qu'il comprend en outre

(C) un moyen de formation de premières données ajoutées (306, 307) destiné à former des premières données ajoutées en ajoutant ensemble deux types de données d'échantillon parmi la pluralité de types de données d'échantillon qui sortent dudit moyen de formation de données d'échantillon, et sortant les premières données ajoutées, les deux types de données d'échantillon étant formés en échantillonnant le signal de chrominance de la porteuse dans ledit moyen de formation de données d'échantillon conformément à deux types de signaux d'horloge d'échantillonnage présentant chacun une différence de phase de 180° par rapport à l'autre, générés par ledit moyen de génération de signal d'horloge d'échantillonnage,

(D) un moyen de conversion débit de données et de conversion d'horloge (328, 329) destiné à convertir un débit de données et une horloge pour les premières données ajoutées qui sortent dudit moyen de formation de premières données ajoutées, et sortant les données ajoutées converties, en synchronisme avec une horloge de transfert de données,

(E) un moyen de retard (308, 309) destiné à retarder les premières données ajoutées qui sortent dudit moyen de conversion de débit de données d'une période de synchronisation horizontale et sortant les premières données ajoutées retardées, et

(F) un moyen de formation de secondes données ajoutées (310, 311) destiné à former des secondes données ajoutées en additionnant les premières données ajoutées qui sortent dudit moyen de conversion de débit de données aux premières données ajoutées retardées qui sortent dudit moyen de retard, et sortant les secondes données ajoutées, sous forme de données de chrominance démodulées.

7. Dispositif de traitement du signal de chrominance selon la revendication 6, dans lequel ledit moyen de génération de signal d'horloge d'échantillonnage est agencé de façon à générer, sur la base du signal de salve de couleur contenu dans le signal de chrominance de la porteuse, quatre types de signaux d'horloge d'échantillonnage, dont chacun présente une fréquence égale à celle du signal de salve de couleur du signal de chrominance de la porteuse et qui sont déphasés de 90° les uns par rapport aux autres.

8. Dispositif de traitement du signal de chrominance selon la revendication 7, dans lequel ledit moyen de formation de données d'échantillon comprend :

(a) un moyen de formation de premières données d'échantillon destiné à former des premières données d'échantillon en échantillonnant le signal de chrominance de la porteuse conformément à un premier signal d'horloge d'échantillonnage généré par ledit moyen de génération de signal d'horloge d'échantillonnage, et sortant les premières données d'échantillon,

(b) un moyen de formation de secondes données d'échantillon destiné à former des secondes données d'échantillon en échantillonnant le signal de chrominance de la porteuse conformément à un second signal d'horloge d'échantillonnage présentant une différence de phase de 180° par rapport au premier signal d'horloge d'échantillonnage généré par ledit moyen de génération de signal d'horloge d'échantillonnage, et sortant les secondes données d'échantillon,

(c) un moyen de formation de troisièmes données d'échantillon destiné à former des troisièmes données d'échantillon en échantillonnant le signal de chrominance de la porteuse conformément à un troisième signal d'horloge d'échantillonnage présentant une différence de phase de 90° par rapport au premier signal d'horloge d'échantillonnage généré par ledit moyen de génération de signal d'horloge d'échantillonnage, et sortant les troisièmes données d'échantillon, et

d) un moyen de formation de quatrièmes données d'échantillon destiné à former des quatrièmes données d'échantillon en échantillonnant le signal de chrominance de la porteuse conformément à un quatrième signal d'horloge d'échantillonnage présentant une différence de phase de 180° par rapport au troisième signal d'horloge d'échantillonnage généré par ledit moyen de génération de signal d'horloge d'échantillonnage, et sortant les quatrièmes données d'échantillon.

9. Dispositif de traitement du signal de chrominance selon la revendication 8, dans lequel ledit moyen de formation de premières données ajoutées est agencé de façon à former les première données ajoutées en additionnant les premières données d'échantillon qui sortent dudit moyen de formation de premières données d'échantillon aux secondes données d'échantillon qui sortent dudit moyen de formation de secondes données d'échantillon, et sort les premières données ajoutées.

10. Dispositif de traitement du signal de chrominance selon la revendication 8, dans lequel ledit moyen de formation de premières données ajoutées est agencé de façon à former les premières données ajoutées en additionnant les troisièmes données d'échantillon qui sortent dudit moyen de formation de troisièmes données d'échantillon aux quatrièmes données d'échantillon qui sortent dudit moyen de formation de quatrièmes données d'échantillon, et sort les premières données ajoutées.

11. Dispositif de traitement du signal de chrominance destiné à démoduler un signal de chrominance de la porteuse, comprenant :

(A) un moyen de génération de signal d'horloge d'échantillonnage (525) destiné à générer une pluralité de types de signaux d'horloge d'échantillonnage (SCA, SCB, SCC) présentant des différences de phase prédéterminées les uns par rapport aux autres, sur la base d'un signal de salve de couleur contenu dans un signal de chrominance de la porteuse,

(B) un moyen de formation de données d'échantillon (501) destiné à former une pluralité de types de données d'échantillon en échantillonnant le signal de chrominance de la porteuse conformément à la pluralité de types de signaux d'horloge d'échantillonnage générés par ledit moyen de génération de signal d'horloge d'échantillonnage, et sortant la pluralité de types de données d'échantillon, caractérisé en ce qu'il comprend en outre :

(C) un moyen d'extraction de premières données d'échantillon (502) destiné à extraire des premières données d'échantillon parmi une pluralité de types de données d'échantillon qui sortent dudit moyen de formation de données d'échantillon et sortant les premières données d'échantillon, les premières données d'échantillon étant formées en échantillonnant le signal de chrominance de la porteuse dans ledit moyen de formation de données d'échantillon conformément à un premier signal d'horloge d'échantillonnage généré par ledit moyen de génération de signal d'horloge d'échantillonnage,

(D) un moyen d'extraction de secondes données d'échantillon (503) destiné à extraire des secondes données d'échantillon parmi la pluralité de types de données d'échantillon qui sortent dudit moyen de formation de données d'échantillon et sortant les secondes données d'échantillon, les secondes données d'échantillon étant formées en échantillonnant le signal de chrominance de la porteuse dans ledit moyen de formation des données d'échantillon conformément à un second signal d'horloge d'échantillonnage présentant une différence de phase de 180° par rapport au premier signal d'horloge d'échantillonnage généré par ledit moyen de génération de signal d'horloge d'échantillonnage,

(E) un moyen d'extraction de troisièmes données d'échantillon (504) destiné à extraire des troisièmes données d'échantillon parmi la pluralité de types de données d'échantillon qui sortent dudit moyen de formation de données d'échantillon et sortant les troisièmes données d'échantillon, les troisièmes données d'échantillon étant formées en échantillonnant le signal de chrominance de la porteuse dans ledit moyen de formation de données d'échantillon conformément à un troisième signal d'horloge d'échantillonnage présentant une différence de phase de 90° par rapport au premier signal d'horloge d'échantillonnage généré par ledit moyen de génération du signal d'horloge d'échantillonnage,

(F) un premier moyen de retard (505) destiné à retarder les premières données d'échantillon qui sortent dudit moyen d'extraction de premières données d'échantillon d'une période de synchronisation horizontale et sortant les premières données d'échantillon retardées,

(G) un moyen de formation de premières données ajoutées (509) destiné à former des premières données ajoutées en additionnant les premières données d'échantillon qui sortent dudit premier moyen de retard aux secondes données d'échantillon qui sortent dudit moyen d'extraction de secondes données d'échantillon, et sortant les premières données ajoutées,

(H) un second moyen de retard (506) destiné à retarder les troisièmes données d'échantillon qui sortent dudit moyen d'extraction de troisièmes données d'échantillon d'une période de synchronisation horizontale et sortant les troisièmes données d'échantillon retardées,

(I) un moyen de formation de secondes données ajoutées (510) destiné à former des secondes données ajoutées en ajoutant les troisièmes données d'échantillon qui sortent dudit second moyen de retard aux troisièmes données d'échantillon qui sortent dudit moyen d'extraction de troisièmes données d'échantillon, et sortant les secondes données ajoutées, et

(J) un moyen de sortie de données (511) destiné à recevoir les premières données ajoutées qui sortent dudit moyen de formation de premières données ajoutées et les secondes données ajoutées qui sortent dudit moyen de formation de secondes données ajoutées, et sortant les premières données ajoutées reçues et les secondes données ajoutées reçues en alternance pour chaque période de synchronisation horizontale, sous forme de données de chrominance démodulées.

**12.** Dispositif de traitement du signal de chrominance selon la revendication 11, dans lequel ledit moyen de formation de données d'échantillon comprend :

(a) un moyen de formation de premières données d'échantillon destiné à former des premières données d'échantillon en échantillonnant le signal de chrominance de la porteuse conformément à un premier signal d'horloge d'échantillonnage généré par ledit moyen de génération de signal d'horloge d'échantillonnage, et sortant les premières données d'échantillon,

(b) un moyen de formation de secondes données d'échantillon destiné à former des secondes données d'échantillon en échantillonnant le signal de chrominance de la porteuse conformément à un second signal d'horloge d'échantillonnage présentant une différence de phase de 180° par rapport au premier signal d'horloge d'échantillonnage généré par ledit moyen de génération de signal d'horloge d'échantillonnage, et sortant les secondes données d'échantillon, et

(c) un moyen de formation de troisièmes données d'échantillon destiné à former des troisièmes données d'échantillon en échantillonnant le signal de chrominance de la porteuse conformément à un troisième signal d'horloge d'échantillonnage présentant une différence de phase de 90° par rapport au premier signal d'horloge d'échantillonnage généré par ledit moyen de génération de signal d'horloge d'échantillonnage, et sortant les troisièmes données d'échantillon.

# F I G . 1

# FIG.2

# FIG.3

# F I G.4(a)

PL, NL, LS, XLS

CLOCK

# F I G.4(b)

MSB
2SB
6SB
LSB

29

# F I G.4(c)

# F I G.4(d)

FIG.5

F I G. 6

# FIG.7

EP 0 518 256 B1

FIG.8

# FIG.9

FIG.10

FIG.11